(19) Europäisches Patentamt
European Patent Office
Office européen des brevets

(11) **EP 4 261 092 B1**

(12) **EUROPEAN PATENT SPECIFICATION**

(45) Date of publication and mention
of the grant of the patent:
**11.02.2026 Bulletin 2026/07**

(21) Application number: **20966265.9**

(22) Date of filing: **21.12.2020**

(51) International Patent Classification (IPC):
*B60W 30/08* (2012.01)    *B60W 30/095* (2012.01)
*B60K 35/00* (2024.01)    *B60W 10/184* (2012.01)
*B60W 10/20* (2006.01)    *B60W 30/09* (2012.01)

(52) Cooperative Patent Classification (CPC):
**B60W 30/0956; B60W 10/184; B60W 10/20;
B60W 30/09; B60W 60/0011;** B60W 2554/402;
B60W 2554/4041; B60W 2554/804; B60W 2556/50

(86) International application number:
**PCT/CN2020/138110**

(87) International publication number:
**WO 2022/133684 (30.06.2022 Gazette 2022/26)**

(54) **CONTROL METHOD, RELATED DEVICE, AND COMPUTER-READABLE STORAGE MEDIUM**

STEUERUNGSVERFAHREN, ZUGEHÖRIGE VORRICHTUNG UND COMPUTERLESBARES
SPEICHERMEDIUM

PROCÉDÉ DE COMMANDE, DISPOSITIF ASSOCIÉ ET SUPPORT DE STOCKAGE LISIBLE PAR
ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.10.2023 Bulletin 2023/42**

(73) Proprietor: **Shenzhen Yinwang Intelligent
Technologies Co., Ltd.
Shenzhen, Guangdong 518129 (CN)**

(72) Inventors:
• **WANG, Cunlian
Shenzhen, Guangdong 518129 (CN)**
• **CHEN, Rui
Shenzhen, Guangdong 518129 (CN)**
• **GONG, Shengbo
Shenzhen, Guangdong 518129 (CN)**
• **WU, Xi
Shenzhen, Guangdong 518129 (CN)**
• **REN, Huijin
Shenzhen, Guangdong 518129 (CN)**

(74) Representative: **Körber, Martin Hans et al
Mitscherlich PartmbB
Patent- und Rechtsanwälte
Karlstraße 7
80333 München (DE)**

(56) References cited:
CN-A- 105 599 764    CN-A- 107 031 619
CN-A- 110 077 397    CN-A- 110 362 077
CN-A- 110 497 909    CN-A- 110 550 029
US-A1- 2010 145 618    US-A1- 2010 201 509
US-A1- 2019 276 012    US-A1- 2020 377 085

Description

## TECHNICAL FIELD

This application relates to the field of intelligent driving technologies, and in particular, to a control method, a related device, and a computer-readable storage medium.

## BACKGROUND

In a driving process of a vehicle, the vehicle plans a driving trajectory, and travels according to the planned driving trajectory. In case of an obstacle in front of the vehicle or around the vehicle, how the vehicle makes a decision is particularly important.

In a conventional technology, when an obstacle in front of a vehicle intrudes into a current lane, the vehicle detects whether a distance between the vehicle and the obstacle meets a safety threshold to determine whether the vehicle may collide with the obstacle. If the distance between the vehicle and the obstacle is less than the safety threshold, the vehicle determines that the vehicle may collide with the obstacle. In this case, the vehicle needs to stop (or follow another vehicle at a low speed) or perform an obstacle avoidance action to avoid a collision, so as to prevent the vehicle from colliding with the obstacle. However, in this implementation, when the vehicle stops (or follows the another vehicle at a low speed), traffic efficiency of the lane is affected, and the vehicle that performs a lane change may interact with a vehicle on an adjacent lane, thereby increasing impact of an uncontrollable factor (a social vehicle) on the vehicle. Especially in some specific scenarios, current traffic rules do not allow the lane change. Therefore, when there is an obstacle in front of a vehicle, how to avoid the obstacle to ensure safe and smooth driving of the vehicle is a technical problem that urgently needs to be resolved.

US 2020/0377085 A1 discloses a system for motion planning for autonomous vehicles in environments having dynamic and static obstacles.

US 2019/0276012 A1 discloses post collision vehicle action optimization for autonomous driving vehicles.

CN 110 550 029 A discloses an obstacle avoidance method and apparatus for intelligent automobiles.

## SUMMARY

This application provides a control method, a related device, and a computer-readable storage medium, so that when there is an obstacle in front of a vehicle, the obstacle can be effectively avoided, thereby ensuring safe and smooth driving of the vehicle. The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect of the invention, an embodiment of this application provides a control method according to claim 1.

During implementation of this embodiment of this application, the M planned paths correspond to respective passage costs, and the passage costs are related to at least one of the following information: the risk level of the obstacle, and the risk level of the vehicle; the risk level of the obstacle represents the possible intrusion of the obstacle into the drivable area of the vehicle and the degree of the possible loss caused by the obstacle to the vehicle; and the risk level of the vehicle represents the degree of the possible loss caused by the vehicle to the obstacle. Therefore, in this implementation, optimized path planning can be implemented, and in case of an intrusion by an obstacle, the control apparatus can effectively avoid the obstacle, thereby ensuring safe and smooth driving of the vehicle.

In a possible implementation, the vehicle information includes coordinates and a size of the vehicle, the obstacle information includes coordinates and a size of the obstacle, and the coordinates of the vehicle and the coordinates of the obstacle are coordinates in a geodetic coordinate system ENU; and the method may further include the following steps: performing rasterization processing on the drivable area of the vehicle, to obtain a raster map; converting the coordinates of the obstacle from the ENU to a vehicle coordinate system according to the coordinates of the vehicle, and obtaining, with reference to the size of the obstacle, an area occupied by the obstacle on the raster map; and obtaining, based on the occupied area, the M planned paths from a start point to a target point. During implementation of this embodiment of this application, rasterization processing is performed on the drivable area of the vehicle, and the area occupied by the obstacle on the raster map is obtained by using the obstacle information, so that path planning can be performed based on the occupied area. Compared with the conventional technology, this reduces dependency on sensor precision.

According to first aspect the invention, an implementation process of performing first processing includes determining a target planned path, where the target planned path is a path with the lowest passage cost in the M planned paths. During implementation of this embodiment of this application, the M planned paths correspond to respective passage costs, and the passage costs are related to at least one of the following information: the risk level of the obstacle, and the risk level of the vehicle; the risk level of the obstacle represents the possible intrusion of the obstacle into the drivable area of the vehicle and the degree of the possible loss caused by the obstacle to the vehicle; and the risk level of the vehicle represents the degree of the possible loss caused by the vehicle to the obstacle. Therefore, in this implementation, optimized path planning can be implemented. In case of an intrusion by an obstacle, the control apparatus determines the planned path with the lowest passage cost in the M planned paths as the target planned path, so that the control apparatus can drive according to the target planned path, and the obstacle can be effectively avoided, thereby ensuring safe and smooth driving of the vehicle.

In a possible implementation, the passage cost corresponding to the target planned path is less than a target threshold. During implementation of this embodiment of this application, in case of an intrusion by an obstacle, the control apparatus determines the planned path with the lowest passage cost in the M planned paths as the target planned path, and further determines whether the passage cost of the target planned path is less than the target threshold, where the target threshold is used to indicate an acceptable maximum passage cost. When determining that the passage cost of the target planned path is less than the target threshold, the control apparatus may drive according to the target planned path; or, according to the invention, when determining that the passage cost of the target planned path is greater than or equal to the target threshold, the control apparatus may control the vehicle to remain stationary. In the conventional technology, when performing path planning, a control apparatus only considers whether a collision may occur; and when it is predicted that a vehicle may collide with an obstacle on all planned paths, path planning fails. Compared with the conventional technology, in this application, when the vehicle will collide with the obstacle, an avoidance path with a minimum collision damage may still be planned for emergency handling by a driver. In this way, a path planning failure can be effectively avoided, and the obstacle can be effectively avoided, thereby ensuring safe driving of the vehicle to the greatest extent.

In a possible implementation, the foregoing method may further include the following steps: obtaining predicted collision information, where the predicted collision information is information obtained when it is predicted that the vehicle may collide with the obstacle; and

determining the risk level of the obstacle and/or the risk level of the vehicle based on the predicted collision information. During implementation of this embodiment of this application, the control apparatus may determine the risk level of the obstacle and/or the risk level of the vehicle based on the predicted collision information. Compared with the conventional technology, this reduces dependency on sensor precision. In addition, this implementation provides a basis for subsequent path planning, so that optimized path planning can be implemented. In case of an intrusion by an obstacle, the control apparatus can effectively avoid the obstacle, thereby ensuring safe and smooth driving of the vehicle.

In a possible implementation, the predicted collision information includes at least one of the following: a speed $\Delta v$ of the vehicle relative to the obstacle, an intersection volume occupied when the vehicle may collide with the obstacle, a collision angle at which the vehicle may collide with the obstacle, a center distance between the vehicle and the obstacle, and a category of the obstacle.

According to a second aspect of the invention, an embodiment of this application provides a control apparatus according to claim 6.

During implementation of this embodiment of this application, the M planned paths correspond to respective passage costs, and the passage costs are related to at least one of the following information: the risk level of the obstacle, and the risk level of the vehicle; the risk level of the obstacle represents the possible intrusion of the obstacle into the drivable area of the vehicle and the degree of the possible loss caused by the obstacle to the vehicle; and the risk level of the vehicle represents the degree of the possible loss caused by the vehicle to the obstacle. Therefore, in this implementation, optimized path planning can be implemented, and in case of an intrusion by an obstacle, the control apparatus can effectively avoid the obstacle, thereby ensuring safe and smooth driving of the vehicle.

In a possible implementation, the vehicle information includes coordinates and a size of the vehicle, the obstacle information includes coordinates and a size of the obstacle, and the coordinates of the vehicle and the coordinates of the obstacle are coordinates in a geodetic coordinate system ENU; and the processing unit is further configured to: perform rasterization processing on the drivable area of the vehicle, to obtain a raster map; convert the coordinates of the obstacle from the ENU to a vehicle coordinate system according to the coordinates of the vehicle, and obtain, with reference to the size of the obstacle, an area occupied by the obstacle on the raster map; and obtain, based on the occupied area, the M planned paths from a start point to a target point.

According to the second aspect of the invention, the processing unit is specifically configured to determine a target planned path, where the target planned path is a path with the lowest passage cost in the M planned paths.

In a possible implementation, the passage cost corresponding to the target planned path is less than a target threshold.

In a possible implementation, the obtaining unit is further configured to obtain predicted collision information, where the predicted collision information is information obtained when it is predicted that the vehicle may collide with the obstacle; and the processing unit is further configured to determine the risk level of the obstacle and/or the risk level of the vehicle based on the predicted collision information.

In a possible implementation, the predicted collision information includes at least one of the following: a speed $\Delta v$ of the vehicle relative to the obstacle, an intersection volume occupied when the vehicle may collide with the obstacle, a collision angle at which the vehicle may collide with the obstacle, a center distance between the vehicle and the obstacle, and a category of the obstacle.

According to a third aspect of the invention, an embodiment of this application provides a computer-readable storage according to claim 11.

## BRIEF DESCRIPTION OF DRAWINGS

FIG. 1 is a functional block diagram of a vehicle 100 according to an embodiment of this application;
FIG. 2a is a schematic diagram of a first application scenario according to an embodiment of this application;
FIG. 2b is a schematic diagram of a second application scenario according to an embodiment of this application;
FIG. 2c is a schematic diagram of a third application scenario according to an embodiment of this application;
FIG. 2d is a schematic diagram of a fourth application scenario according to an embodiment of this application;
FIG. 3a is a schematic flowchart of a control method according to an embodiment of this application;
FIG. 3b is a schematic diagram of path planning according to an embodiment of this application;
FIG. 3c is a schematic diagram of a drivable area of a vehicle according to an embodiment of this application;
FIG. 3d is a schematic diagram of another drivable area of a vehicle according to an embodiment of this application;
FIG. 3e is a schematic diagram of a raster map according to an embodiment of this application;
FIG. 3f is a schematic diagram of expanding an area occupied by an obstacle according to an embodiment of this application;
FIG. 3g is another schematic diagram of expanding an area occupied by an obstacle according to an embodiment of this application;
FIG. 3h is a schematic diagram of a vehicle geometry according to an embodiment of this application;
FIG. 3i is a schematic diagram when a vehicle collides with an obstacle according to an embodiment of this application;
FIG. 3j is a schematic flowchart of another control method according to an embodiment of this application;
FIG. 3k is a schematic diagram of displaying, by using a central control screen of a vehicle, a geometric intersection between a vehicle and an obstacle according to an embodiment of this application;
FIG. 4 is a schematic flowchart of a risk assessment method according to an embodiment of this application;
FIG. 5 is a schematic diagram of a structure of a control apparatus according to an embodiment of this application;
FIG. 6 is a schematic diagram of a structure of a risk assessment apparatus according to an embodiment of this application; and
FIG. 7 is a schematic diagram of a structure of a control apparatus according to an embodiment of this application.

## DESCRIPTION OF EMBODIMENTS

The following clearly and completely describes technical solutions in embodiments of this application with reference to accompanying drawings. It is clear that the described embodiments are merely some but not all embodiments of this application.

In the specification and accompanying drawings of this application, the terms "first", "second", and the like are intended to distinguish between different objects or distinguish between different processing of a same object, but do not indicate a particular order of the objects. In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes other inherent steps or units of the process, the method, the product, or the device. It should be noted that, in embodiments of this application, the term such as "example" or "for example" is used to represent giving an example, an illustration, or descriptions. Any embodiment or design method described as an "example" or "for example" in embodiments of this application should not be explained as being more preferred or having more advantages than another embodiment or design scheme. Exactly, use of the word "example", "for example", or the like is intended to present a relative concept in a specific manner. In embodiments of this application, "A and/or B" represents two meanings: A and B, and A or B. "A, and/or B, and/or C" represents any one of A, B, and C, or represents any two of A, B, and C, or represents A, B, and C.

For a better understanding of the technical solutions described in this application, the following first explains related technical terms in embodiments of this application.

In this embodiment of this application, a road is a passage that is used by a vehicle to travel and that connects two places. A lane is a passage for vehicles in a single column to travel in a same direction. Common lanes include different types of lanes, such as straight lanes, left-turn lanes, and right-turn lanes. One road includes one or more lanes. For example, one road includes four lanes: one left-turn lane, two straight lanes, and one right-turn lane.

In this embodiment of this application, a planned path is a path that allows the vehicle to drive on a specified road, or may be a path that is accurate to a sub-meter level and that allows the vehicle to drive on a specified lane.

It should be noted that the control method provided in this application may be applied to a scenario in which an obstacle intrudes (or slightly intrudes) into a current lane on which a vehicle is driving, or may be applied to an entire self-driving process of the vehicle, to ensure safety and smoothness of the vehicle in a driving process.

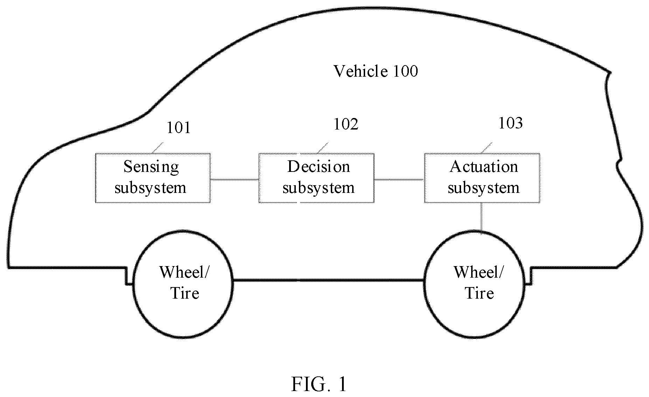

FIG. 1 is a functional block diagram of a vehicle 100 according to an embodiment of this application. In some implementations, the vehicle 100 may be configured to be in a fully autonomous driving mode, a partially autonomous driving mode, or a manual driving mode.

In this embodiment of this application, the vehicle 100 may include at least the following subsystems: a sensing subsystem 101, a decision subsystem 102, and an actuation subsystem 103.

The sensing subsystem 101 may include at least sensors. Specifically, the sensors may include internal sensors and external sensors. The internal sensors are configured to monitor conditions of a vehicle, and may include at least one of a vehicle speed sensor, an acceleration sensor, an angular velocity sensor, or the like. The external sensors are mainly configured to monitor an external environment around the vehicle, and for example, may include a video sensor and a radar sensor. The video sensor is configured to obtain and monitor image data in the environment of the vehicle. The radar sensor is configured to obtain and monitor electromagnetic wave data in the environment of the vehicle, and mainly detect data such as a distance between a surrounding object and the vehicle and a shape of the surrounding object by transmitting an electromagnetic wave and then receiving an electromagnetic wave reflected by the surrounding object.

For example, a plurality of radar sensors are distributed around the entire exterior of the vehicle 100. A subset of the plurality of radar sensors is coupled to the front of the vehicle 100, to position an object in front of the vehicle 100. One or more other radar sensors may be located at the rear of the vehicle 100, to position an object behind the vehicle 100 when the vehicle 100 is reversing. Another radar sensor may be located on a side of the vehicle 100, to position an object such as another vehicle 100 approaching the vehicle 100 from the side. For example, a light detection and ranging (light detection and ranging, LIDAR) sensor may be mounted on the vehicle 100. For example, the LIDAR sensor is mounted in a rotating structure on the top of the vehicle 100. The LIDAR sensor 120 is then rotated to transmit light signals around the vehicle 100 in a 360° mode, to continuously map all objects around the vehicle 100 as the vehicle 100 moves.

For example, an imaging sensor such as a camera, a video camera, or another similar image capture sensor may be mounted on the vehicle 100 to capture images as the vehicle 100 moves. A plurality of imaging sensors may be mounted on all sides of the vehicle 100 to capture images around the vehicle 100 in a 360° mode. The imaging sensor captures not only visible spectrum images, but also infrared spectrum images.

For example, a global positioning system (Global Positioning System, GPS) sensor may be located on the vehicle 100 to provide a controller with geographical coordinates related to a location of the vehicle 100 and a generation time of the coordinates. The GPS includes both an antenna for receiving GPS satellite signals and a GPS receiver coupled to the antenna. For example, when an object is observed in an image or by another sensor, the GPS may provide the geographical coordinates and time of the discovered object.

The decision subsystem 102 may include at least an electronic control unit (Electronic Control Unit, ECU), a map database, and an object database. Specifically, the ECU, also known as "vehicle computer", "vehicle-mounted computer", and the like, is a special-purpose microcomputer controller for automobiles. The ECU includes a microcontroller unit (Microcontroller Unit, MCU), a memory (for example, a read-only memory ROM and a random access memory RAM), an input/output interface, an analog-to-digital converter, large-scale integrated circuits such as a shaper and a drive, and the like. In some feasible embodiments, the decision subsystem 102 may further include a communication unit. The ECU is configured to control a computing device of the vehicle 100 to perform a decision control function. For example, the ECU is connected to a bus, and communicates with another device through the bus. For example, the ECU may obtain information transferred by internal and external sensors, the map database, and an HMI, and output corresponding information to the HMI and an actuator. For example, the ECU loads a program stored in the ROM to the RAM, and a CPU runs the program in the RAM to implement an autonomous driving function. In actual application, the ECU may include a plurality of ECUs. The ECU may recognize a static target and/or dynamic target around the vehicle, for example, obtain a target monitoring result based on an external sensor. The ECU may monitor attributes such as a speed and a direction of the surrounding target. The ECU may obtain condition information of the vehicle and output information based on the internal sensor. Based on the information, the ECU plans a driving path and outputs a corresponding control signal to the actuator, and the actuator performs corresponding lateral motion and longitudinal motion.

In this embodiment of this application, the control apparatus may include but be not limited to the ECU.

In a feasible embodiment, the control apparatus may include an obtaining unit and a processing unit.

The obtaining unit is configured to obtain vehicle information, obstacle information, and a drivable area of a vehicle, where the drivable area of the vehicle indicates an area in which the vehicle can travel safely. The processing unit is configured to perform first processing based on the vehicle information and the obstacle information with reference to the drivable area of the vehicle, where the vehicle information, the obstacle information, and the drivable area of the vehicle indicate M planned paths, and M is an integer greater than 0; and the M planned paths correspond to respective passage costs, and the passage costs are related to at least one of the following information: a risk level of an obstacle and a risk level of the vehicle, where the risk level of the obstacle represents a possible intrusion of the obstacle into the drivable area of the vehicle and a degree of a possible loss caused by the obstacle to the vehicle, and the risk level of the vehicle represents a degree of a possible loss caused by the vehicle to the obstacle.

In the foregoing method, when it is determined that a collision between the vehicle and the obstacle cannot be avoided, an avoidance path with a minimum collision damage may still be planned for emergency handling by a driver. In this implementation, a path planning failure can be effectively avoided, and the obstacle can be effectively avoided, thereby ensuring safe driving of the vehicle to the greatest extent. In actual application, when the control apparatus determines that the collision between the vehicle and the obstacle cannot be avoided, a virtual wall may be created in front of the obstacle, so that the vehicle stops in front of the obstacle or moves forward at a low speed, to ensure safety of the vehicle in a driving process.

In this embodiment of this application, the obtaining unit may be further configured to obtain predicted collision information, where the predicted collision information is information obtained when it is predicted that the vehicle may collide with the obstacle; and the processing unit may be further configured to determine the risk level of the obstacle and/or the risk level of the vehicle based on the predicted collision information.

In some feasible embodiments, the control apparatus may perform path planning based on the risk level of the obstacle and the risk level of the vehicle that are determined by using the foregoing method, and may further perform warning and reminding. This is not specifically limited herein.

In this embodiment of this application, the communication unit is configured to perform V2X (vehicle to everything, that is, Vehicle to X) communication, for example, may exchange data with a surrounding vehicle, a road side communication device, or a cloud server. For example, radio coupled to an antenna may be located in the vehicle 10 to provide wireless communication for a system. The radio is used to operate any wireless communication technology or wireless standard, including but not limited Wi-Fi (IEEE 802.11) and a cellular communication system (for example, one or more of a Global System for Mobile Communications (Global System for Mobile Communications, GSM), Code Division Multiple Access (Code Division Multiple Access, CDMA), Time Division Multiple Access (Time Division Multiple Access, TDMA), Long Term Evolution (Long Term Evolution, LTE), and New Radio (New Radio)). The radio may include a plurality of radios, so that a controller may communicate over wireless channels using various radio technologies.

In this embodiment of this application, the object database may store content information or feature information of a corresponding object, for example, content of a sign or a line. It should be noted that the object database may be included in the map database and may not necessarily exist separately.

In this embodiment of this application, the map database is used to store map information. In some feasible embodiments, a hard disk drive (Hard Disk Drive, HDD) may be used as a data storage device of the map database. It may be understood that the map database may include abundant location information, for example, a connection relationship between roads, a location of a lane line, a quantity of lane lines, other objects around a road, and for example, traffic sign information (for example, locations and heights of traffic lights, and content of signs such as a speed limit sign, a winding road sign, and a slow sign), and information about trees and buildings around a road. The foregoing information is all associated with a geographic location. In addition, the map information may also be used for positioning, and is used in combination with sensed data. In some feasible embodiments, the stored map information may be two-dimensional information, or may be three-dimensional information.

The actuation subsystem 103 may include at least an actuator, where the actuator is configured to control lateral motion and/or longitudinal motion of the vehicle 100. For example, a brake actuator controls a brake system and a braking force according to a control signal received from an ECU; and a steering actuator controls a steering system by using a control signal from an ECU. In some feasible embodiments, the steering system may be an electronic steering system or a mechanical steering system.

It should be noted that elements of the system in FIG. 1 are for illustrative purposes only, and other systems including more or fewer components may be configured to perform any method disclosed in this application.

For a better understanding of this application, the following describes several application scenarios to which the methods described in this application are applicable.

First application scenario:

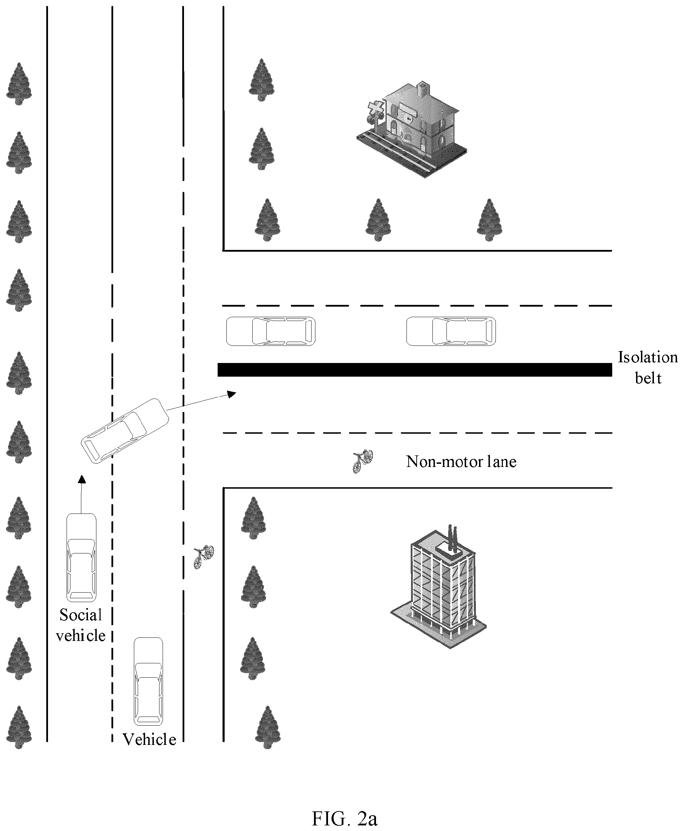

FIG. 2a is a schematic diagram of the first application scenario according to an embodiment of this application. As shown in FIG. 2a, a vehicle drives on a road section, and a social vehicle A (the social vehicle A is an obstacle for the vehicle) travels on a left lane of the vehicle. At a moment, the vehicle learns that the social vehicle A is to turn right (for example, the vehicle determines, by using a camera, that a right-turn light of the social vehicle is blinking), and the vehicle obtains vehicle information, obstacle information, and a drivable area of the vehicle. For example, the drivable area may be at least one of a compliant drivable area or an emergency avoidance drivable area, where the compliant drivable area is used to indicate all areas in which the vehicle can travel safely when traveling in compliance with a traffic rule; and the emergency avoidance drivable area indicates an area in which the vehicle does not collide with an obstacle during driving. Then, the vehicle obtains M planned paths based on the vehicle information and the obstacle information with reference to the drivable area of the vehicle, where M is an integer greater than 0, and obtains a target planned path based on passage costs corresponding to the M planned paths. For example, a planned path with the lowest passage cost in the M planned paths is determined as a target planned path, so that the vehicle can travel according to the determined target planned path, to avoid a collision with the social vehicle A. This implementation can ensure safety of the vehicle in a driving process. In some embodiments, when it is determined that the vehicle will collide with the obstacle, the control apparatus may adjust a driving speed and/or a driving path of the vehicle, to avoid the obstacle, thereby ensuring safety of the vehicle in a driving process. In some embodiments, when it is determined that the collision between the vehicle and the obstacle cannot be avoided, a virtual wall may be created in front of the obstacle, so that the vehicle stops in front of the obstacle or moves forward at a low speed, to ensure safety of the vehicle in a driving process.

Second application scenario:

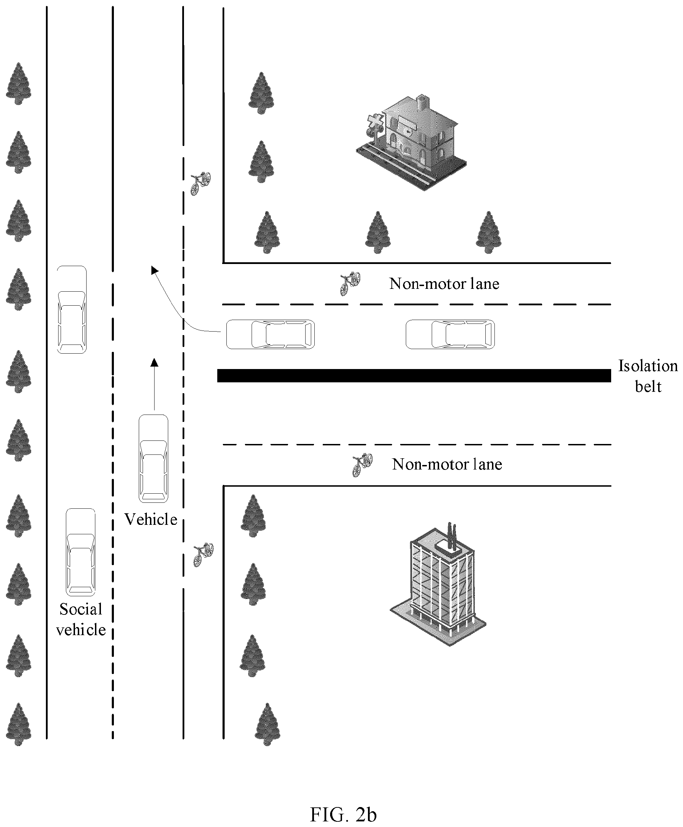

FIG. 2b is a schematic diagram of the second application scenario according to an embodiment of this application. As shown in FIG. 2b, the vehicle goes straight on a road section. At a moment, a social vehicle A suddenly travels into the road section from the right front of the vehicle. In this case, the vehicle obtains vehicle information, obstacle information, and a drivable area of the vehicle. For example, the drivable area may be at least one of a compliant drivable area or an emergency avoidance drivable area, where the compliant drivable area is used to indicate all areas in which the vehicle can travel safely when traveling in compliance with a traffic rule. The emergency avoidance drivable area indicates an area in which the vehicle does not collide with an obstacle during driving. Then, the vehicle obtains M planned paths based on the vehicle information and the obstacle information with reference to the drivable area of the vehicle, where M is an integer greater than 1, and obtains a target planned path based on passage costs corresponding to the M planned paths. For example, a planned path with the lowest passage cost in the M planned paths is determined as a target planned path, so that the vehicle can travel according to the determined target planned path, to avoid a collision with the social vehicle A. This implementation can ensure safety of the vehicle in a driving process.

Third application scenario:

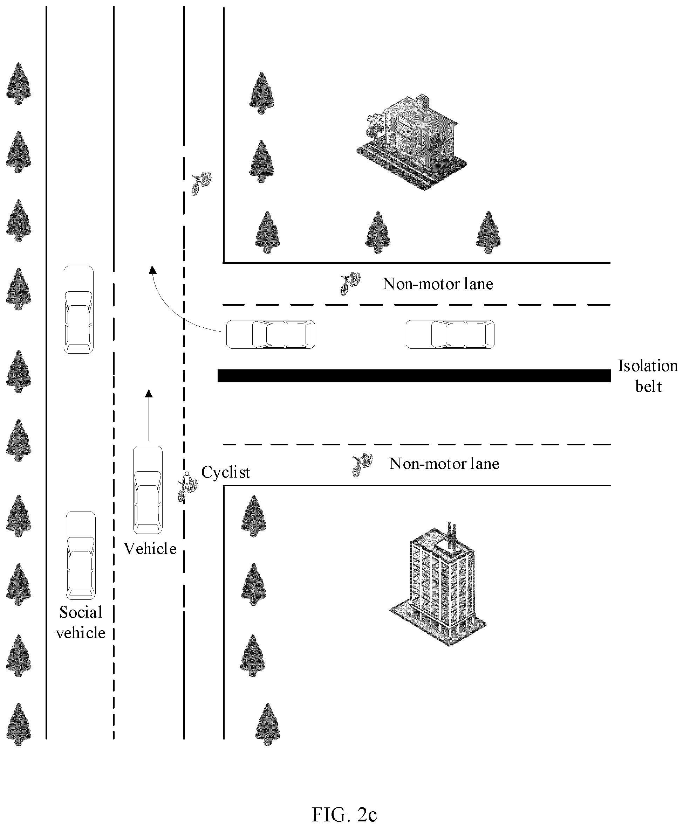

FIG. 2c is a schematic diagram of the third application scenario according to an embodiment of this application. As shown in FIG. 2c, a vehicle drives on a road section, and at a moment, a cyclist rides on a right non-motor lane of the vehicle, and a riding speed exceeds 35 km/h. In addition, a social vehicle is to travel into a current driving lane from the right front of the vehicle. In this case, the vehicle obtains vehicle information, obstacle information (the obstacle information includes information about the cyclist and information about the social vehicle A), and a drivable area of the vehicle. For example, the drivable area may be at least one of a compliant drivable area or an emergency avoidance drivable area, where the compliant drivable area is used to indicate all areas in which the vehicle can travel safely when traveling in compliance with a traffic rule. The emergency avoidance drivable area indicates an area in which the vehicle does not collide with an obstacle during driving. Then, the vehicle obtains M planned paths based on the vehicle information and the obstacle information with reference to the drivable area of the vehicle, where M is an integer greater than 1, and obtains a target planned path based on passage costs corresponding to the M planned paths. For example, a planned path with the lowest passage cost in the M planned paths is determined as a target planned path, so that the vehicle can travel according to the determined target planned path, to avoid a collision with the social vehicle A. This implementation can ensure safety of the vehicle in a driving process.

Fourth application scenario:

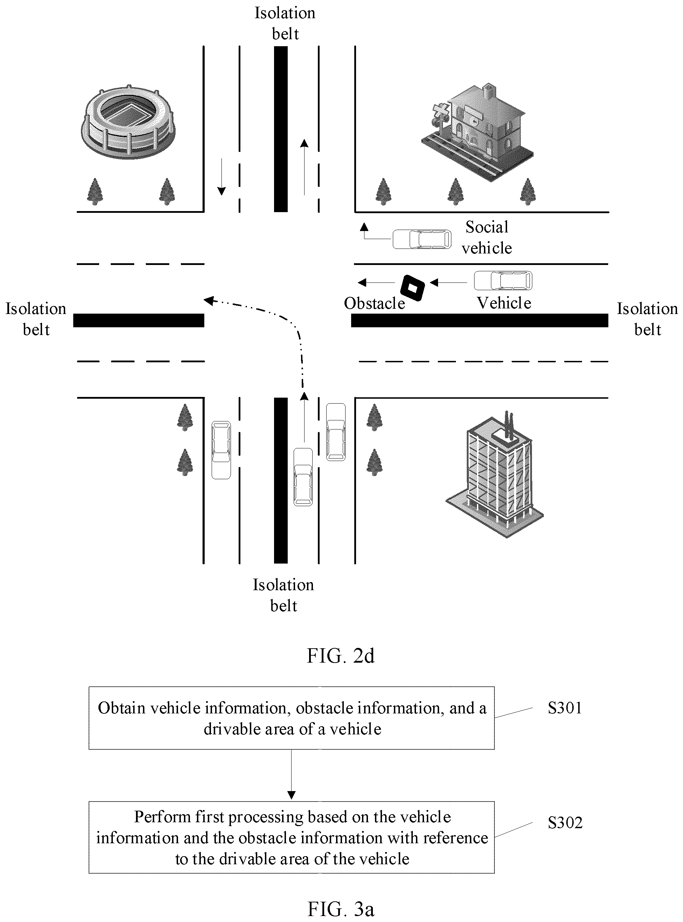

FIG. 2d is a schematic diagram of the fourth application scenario according to an embodiment of this application. As shown in FIG. 2d, a vehicle drives on a road section, and a driving path of the vehicle includes an obstacle. For example, the obstacle is a large-granularity dropped object, a social vehicle travels on a right lane of the vehicle, and a traffic line between the two lanes is a solid line. When a traffic rule does not allow a lane change or traffic on an adjacent lane is dense, the vehicle cannot change a lane. In this case, the vehicle may obtain M planned paths based on vehicle information and obstacle information with reference to an emergency avoidance drivable area, and obtain a target planned path based on passage costs corresponding to the M planned paths. For example, a planned path with the lowest passage cost in the M planned paths is determined as a target planned path, so that the vehicle can travel according to the determined target planned path, to avoid a collision with the social vehicle A. It may be understood that when the vehicle does not obtain the target planned path, the vehicle may remain stationary. When the social vehicle A on the right lane safely passes by, the foregoing vehicle may obtain a new emergency avoidance drivable area, to obtain a new target planned path, so as to bypass the obstacle and continue to drive.

FIG. 3a is a schematic flowchart of a control method according to an embodiment of this application. The method may include but be not limited to the following steps.

Step S301: Obtain vehicle information, obstacle information, and a drivable area of a vehicle, where the drivable area of the vehicle indicates an area in which the vehicle can travel safely. In this embodiment of this application, the vehicle may also be referred to as this vehicle.

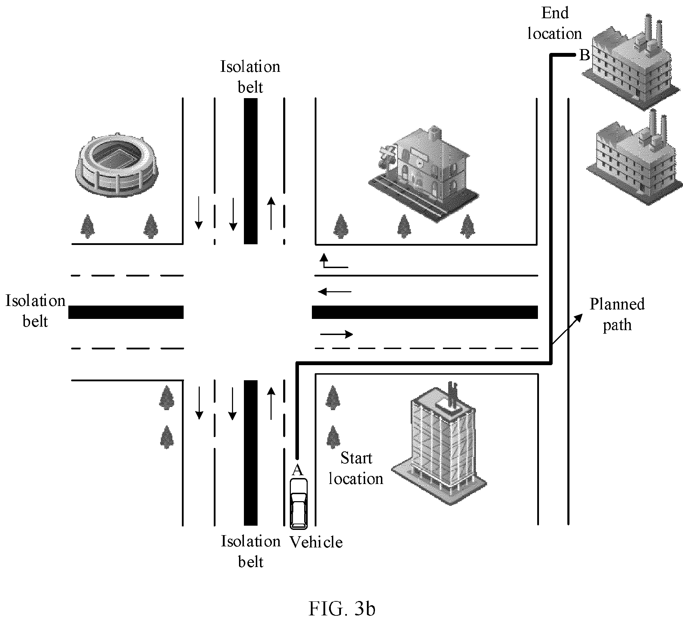

In this embodiment of this application, a sequence point or curve that connects a start location and an end location is referred to as a path, and constructing a path strategy is referred to as path planning. It may be understood that a planned path may be a path that allows the vehicle to drive on a specified road, or may be a path that is accurate to a sub-meter level and that allows the vehicle to drive on a specified lane. For example, as shown in FIG. 3b, the planned path is a curve from a start location A to an end location B.

In this embodiment of this application, the drivable area of the vehicle may include at least one of a compliant drivable area or an emergency avoidance drivable area, where the compliant drivable area is used to indicate all areas in which the vehicle can travel safely when traveling in compliance with a traffic rule; and the emergency avoidance drivable area indicates an area in which the vehicle does not collide with an obstacle during driving.

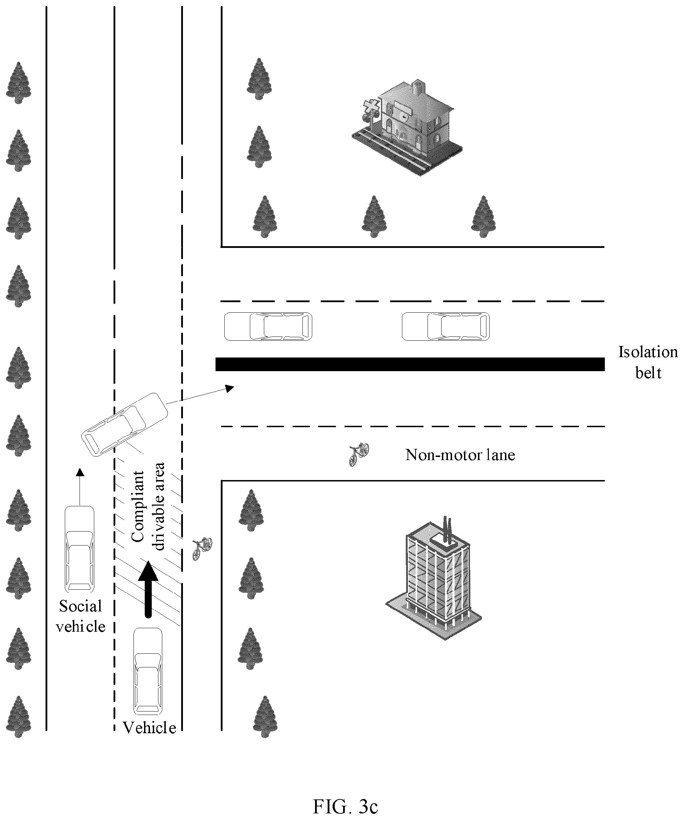

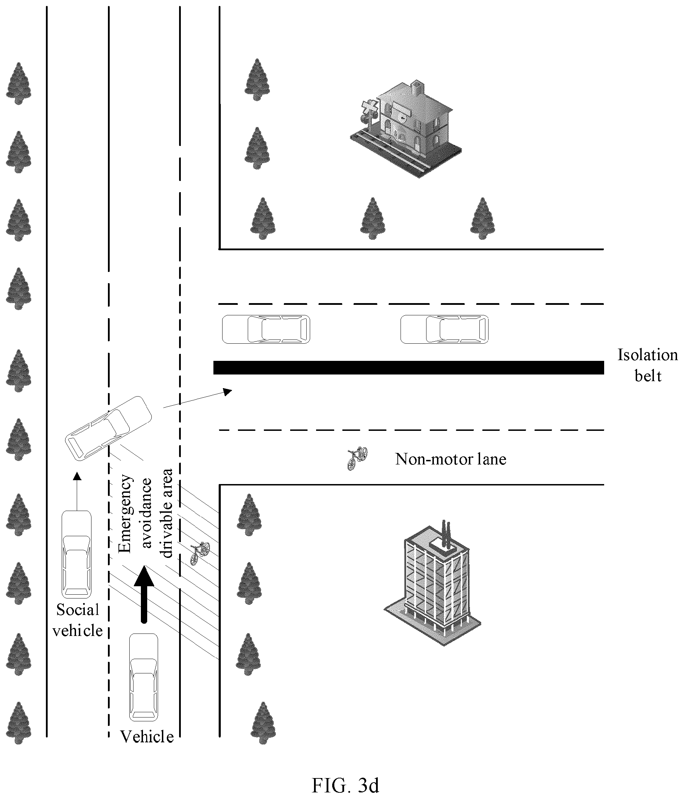

With reference to FIG. 3c and FIG. 3d, the following describes in detail a drivable area of a vehicle in the embodiments of this application.

The foregoing first application scenario is used as an example. A vehicle drives on a road section, and a social vehicle A (the social vehicle A is an obstacle for the vehicle) travels on a left lane of the vehicle. At a moment, the vehicle learns that the social vehicle A is to turn right (for example, the vehicle determines, by using a camera, that a right-turn light of the social vehicle is blinking), as shown in FIG. 3c. A compliant drivable area is used to indicate all areas in which the vehicle can travel safely when traveling in compliance with a traffic rule, and may include but be not limited to an area within a lane range (excluding a lane with a mismatched direction), a coverage area of an optimal virtual lane line at an intersection, a parking belt area, or the like. As shown in FIG. 3d, the emergency avoidance drivable area indicates an area in which the vehicle does not collide with an obstacle during driving; and a lane with a mismatched direction, some reverse lanes, non-motor vehicle lanes, and the like are added as compared with the compliant drivable area. It may be understood that a vehicle may violate a traffic regulation when driving in an emergency avoidance drivable area.

It should be understood that the compliant drivable area and the emergency avoidance drivable area described above are merely examples. A name of the drivable area is not limited in this embodiment of this application. The compliant drivable area may also be referred to as an optimal drivable area, and the emergency avoidance drivable area may also be referred to as a worst drivable area. In some embodiments, the compliant drivable area and the emergency avoidance drivable area described above may also be respectively referred to as a first area, a second area, and the like, respectively.

It should be understood that, in actual application, the drivable area may include one or more of the foregoing compliant drivable area and emergency avoidance drivable area. This is not specifically limited in this application.

In this embodiment of this application, an obstacle is an object that obstructs or blocks driving of a vehicle, and may include a person or an object (such as a car, a tree, or a cyclist) that moves or is stationary in a drivable area of the vehicle.

In this embodiment of this application, the vehicle information may include but be not limited to information about a location (which may also be referred to as coordinates), size, motion status, and the like of the vehicle; and the obstacle information may include but be not limited to information about a location (which may also be referred to as coordinates), size, motion status, and the like of the obstacle. The motion status information of the vehicle is used as an example. The motion status information of the vehicle may include one or more of the following: a driving speed, a heading angle, a steering wheel angle, and an acceleration of the current vehicle.

Step S302: Perform first processing based on the vehicle information and the obstacle information with reference to the drivable area of the vehicle.

In this embodiment of this application, the vehicle information, the obstacle information, and the drivable area of the vehicle indicate M planned paths, and M is an integer greater than 0; and the M planned paths correspond to respective passage costs, and the passage costs are related to at least one of the following information: a risk level of an obstacle and a risk level of the vehicle, where the risk level of the obstacle represents a possible intrusion of the obstacle into the drivable area of the vehicle and a degree of a possible loss caused by the obstacle to the vehicle, and the risk level of the vehicle represents a degree of a possible loss caused by the vehicle to the obstacle.

Specifically, the risk level of the obstacle may be the same as or different from the risk level of the vehicle.

Generally, a higher passage cost corresponding to the planned path means a higher cost paid when the vehicle drives according to the planned path, and a lower probability that the path is selected during path planning. In actual application, the passage cost may be a value, and corresponding unitless values may be obtained for the M planned paths based on a same standard.

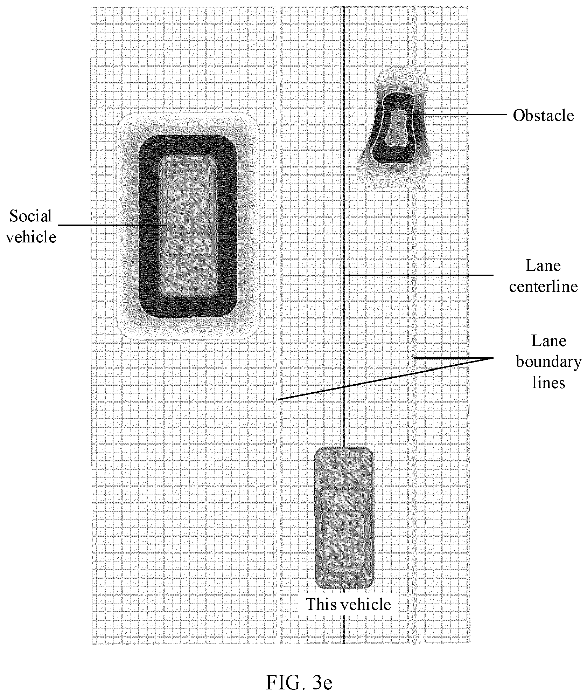

In this embodiment of this application, the control apparatus may obtain the M planned paths based on the vehicle information, the obstacle information, and the drivable area of the vehicle. An implementation process may include: first obtaining the vehicle information, the obstacle information, and the drivable area of the vehicle at a moment t, where generally, the drivable area of the vehicle may be a rectangular area with a size of L*I around the vehicle; performing rasterization processing on the drivable area of the vehicle to obtain a raster map; and then converting coordinates of the obstacle from a geodetic coordinate system ENU to a vehicle coordinate system based on the coordinates of the vehicle, and obtaining, with reference to the size of the obstacle, an area occupied by the obstacle on the raster map. Therefore, M planned paths from a start point to a target point may be obtained based on the occupied area. As shown in FIG. 3e, a square with a size of 50 m*50 m or a rectangular area with another size around the vehicle is used as a drivable area, and rasterization processing is performed on the drivable area to obtain a raster map (as shown by gray grids in FIG. 3e). A grid resolution is 0.25 m*0.25 m, that is, a size of each grid on the raster map is 0.25 m*0.25 m. The coordinates of the obstacle (including a social vehicle and the obstacle shown in FIG. 3e) are converted from the ENU coordinate system to the vehicle coordinate system, to obtain relative location coordinates of the obstacle relative to the vehicle. Then, the vehicle and the obstacle are mapped to the raster map based on the coordinates and the size of the vehicle and the relative location coordinates and the size of the obstacle, to obtain areas occupied by the vehicle and the obstacle on the raster map. In other words, after the area occupied by the obstacle on the raster map is obtained, the M planned paths may be obtained based on the occupied area. Compared with the conventional technology, this reduces dependence on sensor precision.

In a feasible embodiment, the control apparatus may expand the area occupied by the obstacle according to a relative motion trend between the vehicle and the obstacle. The expansion is to expand the area occupied by the obstacle. For example, the occupied area is adjusted by using a first spatial expansion rate on a side that is of the vehicle and that is close to the obstacle. For another example, the occupied area is adjusted by using a second spatial expansion rate on a side that is of the vehicle and that is away from the obstacle. Specifically, the first spatial expansion rate is greater than the second spatial expansion rate. Generally, the first spatial expansion rate and the second spatial expansion rate may be respectively represented by performing expansion by using a first length and performing expansion by using a second length. The following describes the foregoing several cases in detail.

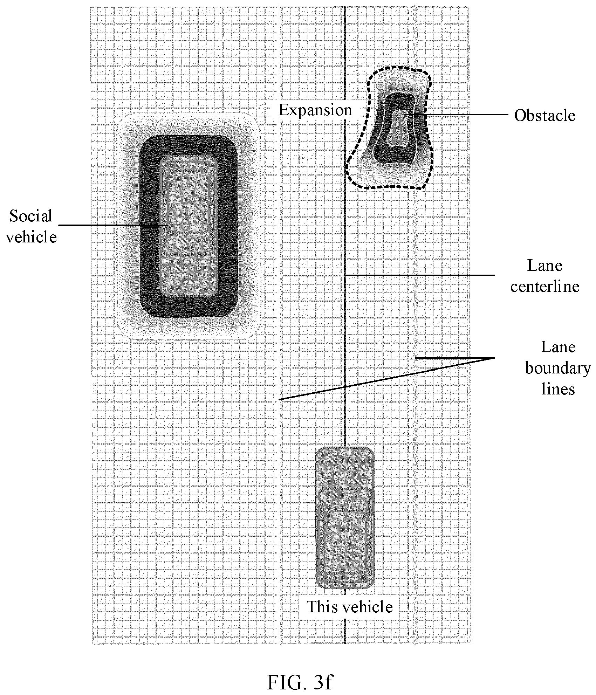

In an example, as shown in FIG. 3f, an obstacle is on the right side of a vehicle. When a relative motion trend between the vehicle and the obstacle is approaching, the first left boundary of the area occupied by the obstacle is expanded by using a first length. It can be learned from FIG. 3f that an area of the expanded occupied area is greater than an area of the unexpanded occupied area.

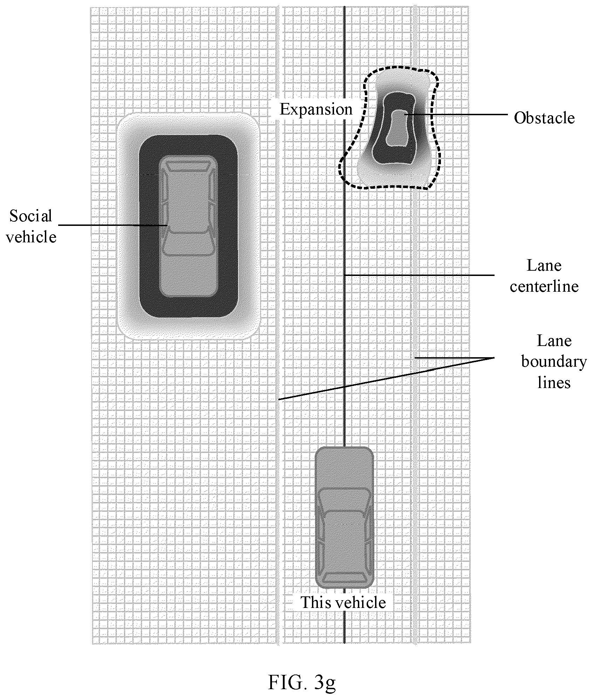

In an example, as shown in FIG. 3g, the obstacle is on the right side of the vehicle. When the relative motion trend between the vehicle and the obstacle is approaching, the first left boundary of the area occupied by the obstacle is expanded by using a first length; and at the same time, the first right boundary of the area occupied by the obstacle is expanded by using a second length. It can be learned from FIG. 3g that an area of the expanded occupied area is greater than an area of the unexpanded occupied area.

In this embodiment of this application, the first length and the second length may be different lengths. Generally, the first length and the second length may be between e0 and $e_{max}$, where e0 is a minimum motion length, and $e_{max}$ is a maximum motion length. In actual application, the first length and the second length may be determined based on an approaching distance between the vehicle and the obstacle.

In some possible examples, the expansion rate is a monotonic function of an approaching distance, but the expansion rate cannot be greater than the maximum expansion degree $e_{max}$. For example, the first length and the second length may be calculated according to a first formula. The first formula may be described as follows:

$$E = f\min\left(e0 + k * s, e_{max}\right)$$

where e0 represents a minimum expansion length on two sides of the first drivable area, $e_{max}$ represents a maximum expansion length on two sides of the first drivable area, and s represents a lateral shortest distance.

Specifically, the lateral shortest distance is a component of a distance between the vehicle and the obstacle in a direction perpendicular to a lane.

It may be learned from the first formula that, on a side where the vehicle approaches the obstacle, a smaller approaching distance between the vehicle and the obstacle indicates a higher first spatial expansion rate; and on a side where the vehicle moves away from the obstacle, a larger approaching distance between the vehicle and the obstacle indicates a lower second spatial expansion rate.

In some possible examples, the expansion rate is a monotonic function of an approaching speed, but the expansion rate cannot be greater than the maximum expansion degree $e_{max}$. On a side where the vehicle approaches the obstacle, a higher approaching speed between the vehicle and the obstacle indicates a higher first spatial expansion rate; and on a side where the vehicle moves away from the obstacle, a lower approaching speed between the vehicle and the obstacle indicates a lower second spatial expansion rate.

In this case, after obtaining the expanded occupied area of the obstacle on the raster map, the control apparatus may obtain M planned paths based on the expanded occupied area.

In this embodiment of this application, a passage cost corresponding to each planned path may be calculated by using a cost function. The cost function is a cost function constructed based on at least one of a safety item S, a comfort item C, a risk level R1 of the obstacle, or a risk level R2 of the vehicle. The safety item S represents a lateral target offset and a longitudinal speed offset between the vehicle and the obstacle. The comfort term C represents a change degree of the acceleration of the vehicle. For example, the change degree of the acceleration of the vehicle may include a lateral Jerk acceleration and a longitudinal Jerk acceleration; the risk level R1 of the obstacle represents a possible intrusion of the obstacle into the drivable area of the vehicle and a degree of a possible loss caused by the obstacle to the vehicle; and the risk level R2 of the vehicle represents a degree of a possible loss caused by the vehicle to the obstacle.

For example, a degree of loss caused by the obstacle to the vehicle may be classified into: a slight scratch, a slight deformation, a vehicle body depression, and the like. A degree of loss caused by the vehicle to the obstacle is related to a category of the obstacle. For example, when the obstacle is a pedestrian, the degree of loss caused by the vehicle to the obstacle may include a pedestrian injury; or when the obstacle is another vehicle, the degree of loss caused by the vehicle to the obstacle may include a slight scratch, a slight deformation, a vehicle body depression, or the like. It should be understood that the foregoing description is merely an example, and should not constitute a limitation.

In a feasible embodiment, the cost function may be:

$$G = w1 \times S + w2 \times C + w3 \times R1 + w4 \times R2$$

where w1, w2, w3, and w4 are weight coefficients; S represents the safety item; C represents the comfort item; R1 represents the risk level of the obstacle; and R2 represents the risk level of the vehicle.

In actual application, the control apparatus may adjust values of w1, w2, w3, and w4. Adjusting the weight coefficient w1 of the security item is used as an example. When the vehicle terminal detects that a quantity of obstacles is greater than a preset threshold, the control apparatus may increase the weight coefficient of the security item S; or when the control apparatus detects that an obstacle occupies the drivable area of the vehicle, and operation information of a driver of the vehicle is acceleration without steering, the control apparatus increases the weight coefficient of the security item S. Alternatively, when the control apparatus detects that an obstacle intrudes into the drivable area of the vehicle, and the operation information of the driver of the vehicle is acceleration with steering to avoid the obstacle, the weight coefficient of the safety item S is reduced; or when the control apparatus detects that an obstacle intrudes into the drivable area of the vehicle, and the operation information of the driver of the vehicle is decelerating without steering or decelerating with steering, the weight coefficient of the safety item S is reduced.

Adjusting the weight coefficient of the risk level R1 of the obstacle is used as an example. When the control apparatus determines that a time of collision between the vehicle and the obstacle is less than a specified value, the control apparatus may increase the weight coefficient of the risk level R1 of the obstacle.

It should be noted that a value range of each of w1, w2, w3, and w4 is (0, 1).

In a feasible embodiment, the foregoing safety item S, comfort item C, and risk level R1, and the risk level R2 of the vehicle may be respectively represented as follows:

$$S = w11 \times d(t_n)^2 + w12 \times (ds(t_n))^2$$

$$C = w21 \times \sum_{t=t_0}^{t_n} d(t)^2 + w22 \times \sum_{t=t_0}^{t_z} s(t)^2$$

$$R1 = (r_{obj}(t))^2$$

$$R2 = (r_{ego}(t))^2$$

where w11, w12, w21, and w22 are weight coefficients.

In a feasible embodiment, predicted collision information may be obtained based on location information and motion status information of the vehicle and the obstacle, where the predicted collision information is information obtained when it is predicted that the vehicle may collide with the obstacle. Then, the risk level of the obstacle and/or the risk level of the vehicle are/is obtained based on the predicted collision information. An embodiment of this application further provides a method for predicting a collision between a vehicle and an obstacle. Specifically, a control apparatus may predict a first motion trajectory of the vehicle and a second motion trajectory of the obstacle in a preset time period based on location information and motion status information of the vehicle and the obstacle, and then determine whether the first motion trajectory will collide with the second motion trajectory. For example, a safety distance between the vehicle and the obstacle may be calculated based on a size (L, W, H) of the vehicle and a size (l, w, h) of the obstacle. The safety distance may be represented as:

$$d_{safety} = 0.5(\sqrt{L^2 + W^2 + H^2} + \sqrt{l^2 + w^2 + h^2}) + \delta$$

where $\delta$ represents a reservation amount, and is related to perception precision of the vehicle. At a moment t, a distance between the vehicle and the obstacle may be represented as:

$$d(t) = \sqrt{x_{obj}^{2}(t) + y_{obj}^{2}(t) + z_{obj}^{2}(t)}$$

If the distance between the vehicle and the obstacle is greater than the safety distance at the moment t, it is determined that the first motion trajectory does not collide with the second motion trajectory.

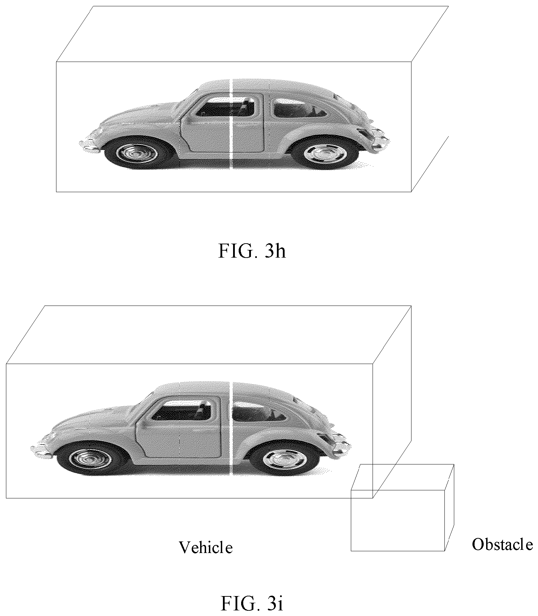

If the distance between the vehicle and the obstacle is less than the safety distance at the moment t, it may be determined, according to whether a vehicle geometry intersects with an obstacle geometry, whether the vehicle will collide with the obstacle. Specifically, the vehicle geometry is a geometric envelope of the vehicle, and the geometric envelope of the vehicle represents an overall shape obtained by gradually extending a shape of the vehicle. The obstacle geometry is a geometric envelope of the obstacle. FIG. 3h is a schematic diagram of a vehicle geometry according to an embodiment of this application.

For another example, a heading angle of the obstacle at the moment t is obtained according to the second motion trajectory, so that a geometric model of the obstacle at the moment t may be obtained. Specifically, the geometric model of the obstacle at the moment t may be represented as:

$$P_{obj}(t) = A(\theta(t))P_{obj}(0) + (x_{obj}(t), y_{obj}(t), z_{obj}(t)) - (x_{obj}(0), y_{obj}(0), z_{obj}(0))$$

where a rotation characteristic matrix $A(\theta(t))$ may be represented as:

$$A(\theta(t)) = \begin{bmatrix} \cos(\theta) & -\sin(\theta) \\ \sin(\theta) & \cos\theta \end{bmatrix}$$

Then, it is determined whether there is an intersection between the geometric model of the vehicle and the geometric model of the obstacle at the moment t, which may be specifically represented as follows:

$$collisionStatu(t) = collisionCheck(P_{ego}, P_{obj}(t)$$

If there is an intersection between the geometric model of the vehicle and the geometric model of the obstacle, that is, collisionResult=1, it is determined that the vehicle will collide with the obstacle. Specifically, a schematic diagram showing that the first motion trajectory will collide with the second motion trajectory may be shown in FIG. 3i.

It should be noted that the foregoing manner of determining whether there is an intersection between the geometric model of the vehicle and the geometric model of the obstacle at the moment t does not mean that the first motion trajectory corresponding to the vehicle intersects the second motion trajectory corresponding to the obstacle, but means that the motion trajectories of the two geometric bodies intersect. In this implementation, shapes of the vehicle and the obstacle are fully considered. Compared with the conventional technology, collision detection precision can be improved, and convenience is provided for subsequently determining the risk level of the vehicle and the risk level of the obstacle.

It should be understood that when collisionResult=0, it indicates that the vehicle will not collide with the obstacle. In this case, the risk level of the obstacle is 0, and the risk level of the vehicle is 0.

It should be understood that, when collisionResult=1, it indicates that the vehicle will collide with the obstacle. In this case, the control apparatus obtains predicted collision information, where the predicted collision information includes at least one of the following: a speed $\Delta v$ of the vehicle relative to the obstacle, an intersection volume occupied when the vehicle may collide with the obstacle, a collision angle at which the vehicle may collide with the obstacle, a center distance between the vehicle and the obstacle, and a category of the obstacle.

In addition, the control apparatus may further obtain a collision moment t0.

In this embodiment of this application, the risk level of the obstacle and the risk level of the vehicle may be obtained based on the predicted collision information. During specific implementation, the risk level of the obstacle and the risk level of the vehicle may be obtained by using a risk assessment function. The risk assessment function may be a function constructed based on the predicted collision information.

In a feasible embodiment, the risk assessment function may be represented as:

$$R = m\ (w_{to} \times t0, w_{|v(to)|} \times |v(to)|, w_{|V(\max)|} \times |V(\max)|, w_{|\theta(to)|} \times |\theta(to)|, w_{|o(x)|} \times |o(x)|, w_c \times class)^T$$

where m represents a risk level vector of each piece of predicted collision information in a current state, for example, m = (3, 2, 1, 2, 1, 0, 3); $to$, $W_{|v(to)|}$, $W_{|V(\max)|}$, $W_{|\theta(to)|}$, $W_{|o(x)|}$, and $W_c$ respectively represent weights corresponding to pieces of the predicted collision information; $t_0$ represents a collision moment; represents a speed $\Delta v$ of the vehicle relative to the obstacle; $|V(\max)|$ represents an intersection volume occupied when the vehicle may collide with the obstacle; $|\theta(to)|$ represents a collision angle at which the vehicle may collide with the obstacle; $o(x)$ represents a center distance between the vehicle and the obstacle; and *class* represents a category of the obstacle.

Generally, the category of the obstacle may include but be not limited to a pedestrian, another vehicle, and a non-motor vehicle (for example, a bicycle or an electric motorcycle).

In a feasible embodiment, $W_{to}$, $W_{|v(to)|}$, $W_{|V(\max)|}$, $W_{|\theta(to)|}$, $W_{|o(x)|}$, and $W_c$ may meet:

$$W_{to} + W_{|v(to)|} + W_{|V(\max)|} + W_{|\theta(to)|} + W_{|o(x)|} + W_c = 1$$

In a feasible embodiment, values of $W_{to}$, $W_{|v(to)|}$, $W_{|V(\max)|}$, $W_{|\theta(to)|}$, $W_{|o(x)|}$, and $W_c$ may be determined by determining whether these parameters are key factors. is used as an example. When it is determined that $|V(\max)|$ is a key factor, a weight corresponding to $|V(\max)|$ is relatively large; or when it is determined that $|V(\max)|$ is not a key factor, a weight corresponding to $|V(\max)|$ is relatively small.

It should be understood that, if the obtained collision time is shorter, for the vehicle, a risk brought by the obstacle to the vehicle is higher.

It should be further understood that, if the speed $\Delta v$ of the vehicle relative to the obstacle is higher, for the vehicle, a risk brought by the obstacle to the vehicle is higher.

It should be further understood that, if the intersection volume occupied when the vehicle may collide with the obstacle is larger, for the vehicle, a risk brought by the obstacle to the vehicle is higher.

It should be further understood that, if the collision angle at which the vehicle may collide with the obstacle is larger, for the vehicle, a risk brought by the obstacle to the vehicle is higher.

After the control apparatus obtains M planned paths based on vehicle information and obstacle information with reference to a drivable area of the vehicle, and determines a passage cost corresponding to each planned path by using the foregoing method, the control apparatus may perform first processing based on the passage cost corresponding to each planned path. The first processing may include but be not limited to the following step:

Step S302-1: Determine a target planned path, where the target planned path is a path with the lowest passage cost in the M planned paths.

In actual application, the control apparatus may sort the M planned paths based on the passage costs respectively corresponding to the M planned paths, to obtain a sorting result; and then determine, based on the sorting result, a planned path with the lowest passage cost as the target planned path. In this case, when the control apparatus performs driving according to the determined target planned path, an obstacle can be effectively avoided, thereby ensuring safe and smooth driving of the vehicle.

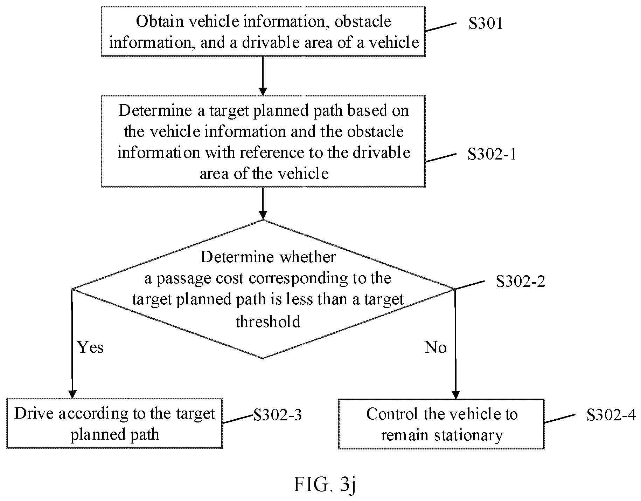

As shown in FIG. 3j, after step S302-1 is performed, the method may further include the following step:

Step 302-2: Determine whether the passage cost corresponding to the target planned path is less than a target threshold; and if the passage cost corresponding to the target planned path is less than the target threshold, perform step S302-3; or if the passage cost corresponding to the target planned path is not less than the target threshold, perform step S302-4.

In this embodiment of this application, the target threshold is used to indicate a maximum acceptable passage cost. In some embodiments, the control apparatus may determine the target threshold by analyzing historical traffic data of a user (for example, the historical traffic data may include historical vehicle accident data). In some embodiments, the target threshold may be set by the user based on a requirement of the user.

Step S302-3: When it is determined that the passage cost of the target planned path is less than the target threshold, drive according to the target planned path.

Step S302-4: When it is determined that the passage cost of the target planned path is not less than (for example, may be greater than or equal to) the target threshold, control the vehicle to remain stationary.

In the conventional technology, when performing path planning, a control apparatus only considers whether a collision may occur; and when it is predicted that a vehicle may collide with an obstacle on all planned paths, path planning fails. Compared with the conventional technology, in this application, when the vehicle will collide with the obstacle, an avoidance path with a minimum collision damage may still be planned for emergency handling by a driver. In this way, a path planning failure can be effectively avoided, and the obstacle can be effectively avoided, thereby ensuring safe driving of the vehicle to the greatest extent.

During implementation of this embodiment of this application, the M planned paths correspond to respective passage costs, and the passage costs are related to at least one of the following information: the risk level of the obstacle, and the risk level of the vehicle; the risk level of the obstacle represents the possible intrusion of the obstacle into the drivable area of the vehicle and the degree of the possible loss caused by the obstacle to the vehicle; and the risk level of the vehicle represents the degree of the possible loss caused by the vehicle to the obstacle. Therefore, in this implementation, optimized path planning can be implemented, and in case of an intrusion by an obstacle, the control apparatus can effectively avoid the obstacle, thereby ensuring safe and smooth driving of the vehicle.

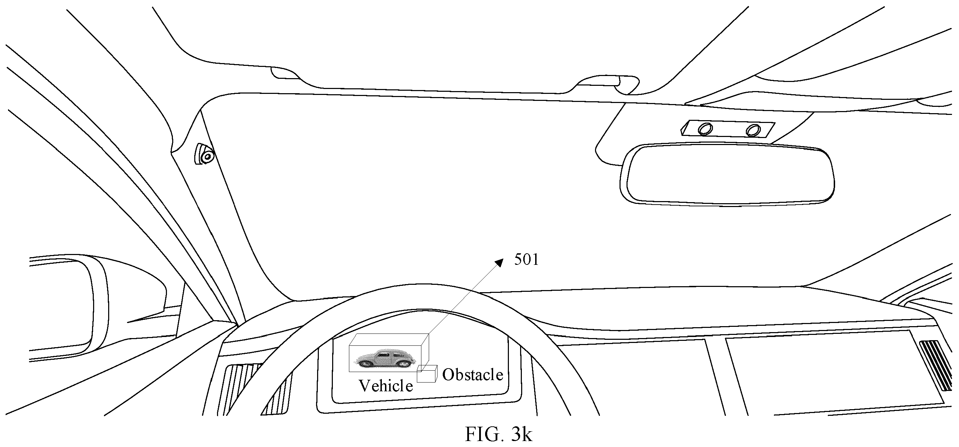

In the method embodiment described above, as shown in FIG. 3k, a schematic diagram showing an intersection between a geometric model of a vehicle and a geometric model of an obstacle at a moment t may be displayed on a central control screen 501 of the vehicle, and warning prompt information is sent based on an intersection status. For example, the warning prompt information may be: "Please note that the vehicle will collide with an obstacle in five seconds." For another example, the warning prompt information may also be: "Please drive with caution, and the vehicle will collide with an obstacle." In this implementation, driving attention of the driver can be improved. In this case, the driver may switch from an autonomous driving mode to a manual driving mode, or may reduce a driving level of the self-driving vehicle, for example, switch from the autonomous driving level L5 to the autonomous driving level L3.

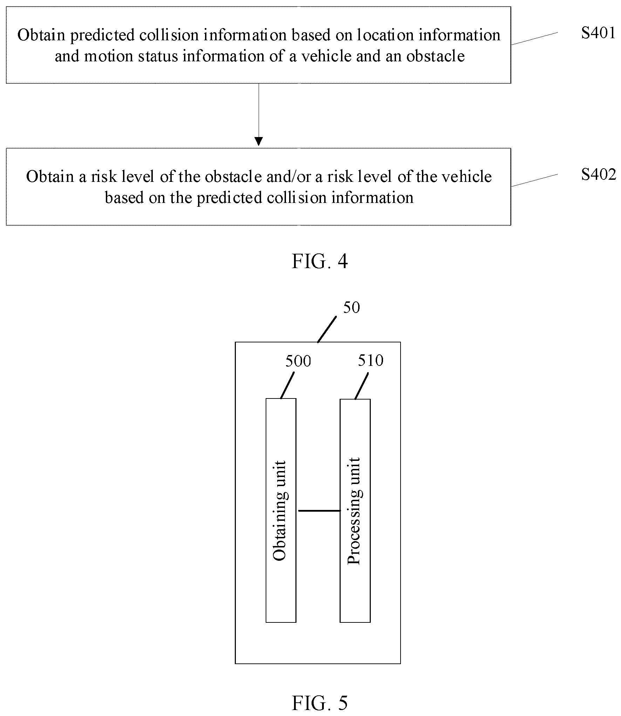

FIG. 4 is a schematic flowchart of a risk assessment method according to an embodiment of this application. The method may include but be not limited to the following steps.

Step S401: Obtain predicted collision information based on location information and motion status information of a vehicle and an obstacle, where the predicted collision information is information obtained when it is predicted that a vehicle may collide with an obstacle.

In this embodiment of this application, the predicted collision information includes at least one of the following: a speed $\Delta v$ of the vehicle relative to the obstacle, an intersection volume occupied when the vehicle may collide with the obstacle, a collision angle at which the vehicle may collide with the obstacle, a center distance between the vehicle and the obstacle, and a category of the obstacle.

Step S402: Obtain a risk level of the obstacle and/or a risk level of the vehicle based on the predicted collision information, where the risk level of the obstacle represents a possible intrusion of the obstacle into a drivable area of the vehicle and a degree of a possible loss caused by the obstacle to the vehicle, and the risk level of the vehicle represents a degree of a possible loss caused by the vehicle to the obstacle.

In a feasible embodiment, the control apparatus may obtain the risk level of the obstacle and the risk level of the vehicle by using a risk assessment function. The risk assessment function may be a function constructed based on the predicted collision information.

In a feasible embodiment, the risk assessment function may be represented as:

$$R = m\ (w_{to} \times t0, w_{|v(to)|} \times |v(to)|, w_{|V(\max)|} \times |V(\max)|, w_{|\theta(to)|} \times |\theta(to)|, w_{|o(x)|} \times |o(x)|, w_c \times class)^T$$

where m represents a risk level vector of each piece of predicted collision information in a current state, for example, m = (3, 2, 1, 2, 1, 0, 3); $W_{to}$, $W_{|v(to)|}$, $W_{|V(\max)|}$, $W_{|\theta(to)|}$, $W_{|o(x)|}$, and $W_c$ respectively represent weights corresponding to pieces of the predicted collision information; $t0$ represents a collision moment; $|v(to)|$ represents a speed $\Delta v$ of the vehicle relative to the obstacle; $|V(\max)|$ represents an intersection volume occupied when the vehicle may collide with the obstacle; represents a collision angle at which the vehicle may collide with the obstacle; $o(x)$ represents a center distance between the vehicle and the obstacle; and *class* represents a category of the obstacle.

Generally, the category of the obstacle may include but be not limited to a pedestrian, another vehicle, and a non-motor vehicle (for example, a bicycle or an electric motorcycle).

In a feasible embodiment, $W_{to}$, $W_{|v(to)|}$, $W_{|V(\max)|}$, $W_{|\theta(to)|}$, $W_{|o(x)|}$, and $W_c$ may meet:

$$W_{to} + W_{|v(to)|} + W_{|V(\max)|} + W_{|\theta(to)|} + W_{|o(x)|} + W_c = 1$$

In a feasible embodiment, values of $W_{to}$, $W_{|v(to)|}$, $W_{|V(\max)|}$, $W_{|\theta(to)|}$, $W_{|o(x)|}$, and $W_c$ may be determined by determining whether these parameters are key factors. $|V(\max)|$ is used as an example. When it is determined that $|V(\max)|$ is a key factor, a weight corresponding to $|V(\max)|$ is relatively large; or when it is determined that $|V(\max)|$ is not a key factor, a weight corresponding to $|V(\max)|$ is relatively small.

It should be understood that, if the obtained collision time is shorter, for the vehicle, a risk brought by the obstacle to the vehicle is higher.

It should be further understood that if the speed $\Delta v$ of the vehicle relative to the obstacle is higher, for the vehicle, a risk brought by the obstacle to the vehicle is higher.

It should be further understood that, if the intersection volume occupied when the vehicle may collide with the obstacle is larger, for the vehicle, a risk brought by the obstacle to the vehicle is higher.

It should be further understood that, if the collision angle at which the vehicle may collide with the obstacle is larger, for the vehicle, a risk brought by the obstacle to the vehicle is higher.

In actual application, the vehicle may perform path planning based on the risk level of the obstacle and the risk level of the vehicle that are determined by using the foregoing method, and may further perform warning and reminding. This is not specifically limited herein.

During implementation of this embodiment of this application, the control apparatus may determine the risk level of the obstacle and/or the risk level of the vehicle based on the predicted collision information. Compared with the conventional technology, this reduces dependency on sensor precision.

The foregoing embodiments focus on how the control apparatus can obtain the target planned path based on the passage costs corresponding to the M planned paths. The following describes in detail apparatuses used in this application. For details not disclosed in the apparatus embodiments of this application, refer to the method embodiments of this application.

As shown in FIG. 5, an embodiment of this application provides a control apparatus. The apparatus 50 may include:

an obtaining unit 500, configured to obtain vehicle information, obstacle information, and a drivable area of a vehicle, where the drivable area of the vehicle indicates an area in which the vehicle can travel safely; and

a processing unit 510, configured to perform first processing based on the vehicle information, the obstacle information, and the drivable area of the vehicle, where the vehicle information, the obstacle information, and the drivable area of the vehicle indicate M planned paths, and M is an integer greater than 0; and the M planned paths correspond to respective passage costs, and the passage costs are related to at least one of the following information: a risk level of an obstacle and a risk level of the vehicle, where the risk level of the obstacle represents a possible intrusion of the obstacle into the drivable area of the vehicle and a degree of a possible loss caused by the obstacle to the vehicle, and the risk level of the vehicle represents a degree of a possible loss caused by the vehicle to the obstacle.

In a possible implementation, the vehicle information includes coordinates and a size of the vehicle, the obstacle information includes coordinates and a size of the obstacle, and the coordinates of the vehicle and the coordinates of the obstacle are coordinates in a geodetic coordinate system ENU; and the processing unit 510 is further configured to:

perform rasterization processing on the drivable area of the vehicle, to obtain a raster map;
convert the coordinates of the obstacle from the ENU to a vehicle coordinate system according to the coordinates of the vehicle, and obtain, with reference to the size of the obstacle, an area occupied by the obstacle on the raster map; and
obtain, based on the occupied area, the M planned paths from a start point to a target point.

In a possible implementation, the processing unit 510 is specifically configured to:
determine a target planned path, where the target planned path is a path with the lowest passage cost in the M planned paths.

In a possible implementation, the passage cost corresponding to the target planned path is less than a target threshold.

In a possible implementation, the obtaining unit is further configured to obtain predicted collision information, where the predicted collision information is information obtained when it is predicted that the vehicle may collide with the obstacle; and the processing unit is further configured to determine the risk level of the obstacle and/or the risk level of the vehicle based on the predicted collision information.

In a possible implementation, the predicted collision information includes at least one of the following: a speed $\Delta v$ of the vehicle relative to the obstacle, an intersection volume occupied when the vehicle may collide with the obstacle, a collision angle at which the vehicle may collide with the obstacle, a center distance between the vehicle and the obstacle, and a category of the obstacle.

It should be noted that, for the path planning apparatus described in this embodiment of this application, refer to related descriptions of the control method in the method embodiments in FIG. 3a and FIG. 3j. Details are not described herein again.

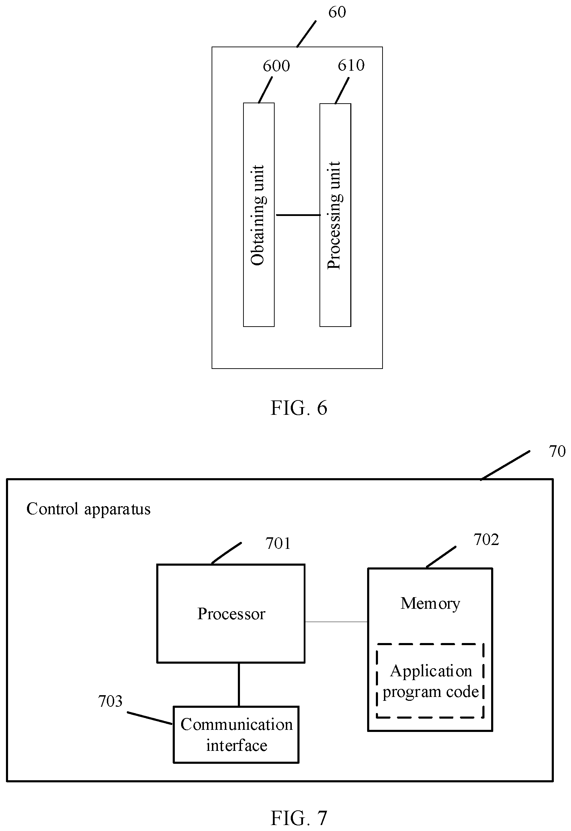

As shown in FIG. 6, an embodiment of this application provides a risk assessment apparatus. The apparatus 60 may include:

an obtaining unit 600, configured to obtain predicted collision information based on location information and motion status information of a vehicle and an obstacle, where the predicted collision information is information obtained when it is predicted that a vehicle may collide with an obstacle; and

a processing unit 610, configured to obtain a risk level of the obstacle and/or a risk level of the vehicle based on the predicted collision information, where the risk level of the obstacle represents a possible intrusion of the obstacle into a drivable area of the vehicle and a degree of a possible loss caused by the obstacle to the vehicle, and the risk level of the vehicle represents a degree of a possible loss caused by the vehicle to the obstacle.

In a possible implementation, the predicted collision information includes at least one of the following: a speed $\triangle v$ of the vehicle relative to the obstacle, an intersection volume occupied when the vehicle may collide with the obstacle, a collision angle at which the vehicle may collide with the obstacle, a center distance between the vehicle and the obstacle, and a category of the obstacle.

It should be noted that, for the risk assessment apparatus described in this embodiment of this application, refer to related descriptions of the risk assessment method in the method embodiment in FIG. 4. Details are not described herein again.

FIG. 7 is a schematic diagram of a structure of a control apparatus according to an embodiment of this application. The control apparatus 70 includes at least one processor 701 and at least one communication interface 703. Optionally, the control apparatus 70 may further include at least one memory 702. The control apparatus may further include a general component such as an antenna, and details are not described herein again.

The processor 701 may be a general-purpose central processing unit (CPU), a microprocessor, an application-specific integrated circuit (application-specific integrated circuit, ASIC), or one or more integrated circuits configured to control program execution of the foregoing solution.

The communication interface 703 is configured to communicate with another device or a communication network.

The memory 702 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium, another magnetic storage device, or any other medium that can be configured to carry or store expected program code in a form of an instruction or a data structure and that can be accessed by a computer. However, this is not limited thereto. The memory may exist independently, and is connected to the processor through the bus. Alternatively, the memory may be integrated with the processor.

The memory 702 is configured to store application program code used to execute the foregoing solution, and the processor 701 controls the execution. The processor 701 is configured to execute the application program code stored in the memory 702. For example, the code stored in the memory 702 may perform the control methods provided in FIG. 3a and FIG. 3j and the risk assessment method provided in FIG. 4.

Specifically, the processor 701 is configured to invoke data and program code in the memory, to perform the following steps:

obtain vehicle information, obstacle information, and a drivable area of a vehicle, where the drivable area of the vehicle indicates an area in which the vehicle can travel safely; and

perform first processing based on the vehicle information and the obstacle information with reference to the drivable area of the vehicle.

The vehicle information, the obstacle information, and the drivable area of the vehicle indicate M planned paths, and M is an integer greater than 0; and the M planned paths correspond to respective passage costs, and the passage costs are related to at least one of the following information: a risk level of an obstacle and a risk level of the vehicle, where the risk level of the obstacle represents a possible intrusion of the obstacle into the drivable area of the vehicle and a degree of a possible loss caused by the obstacle to the vehicle, and the risk level of the vehicle represents a degree of a possible loss caused by the vehicle to the obstacle.

The vehicle information includes coordinates and a size of the vehicle, the obstacle information includes coordinates and a size of the obstacle, and the coordinates of the vehicle and the coordinates of the obstacle are coordinates in a geodetic coordinate system ENU; and the processor 701 may be further configured to:

perform rasterization processing on the drivable area of the vehicle, to obtain a raster map;

convert the coordinates of the obstacle from the ENU to a vehicle coordinate system according to the coordinates of the vehicle, and obtain, with reference to the size of the obstacle, an area occupied by the obstacle on the raster map; and

obtain, based on the occupied area, the M planned paths from a start point to a target point.

That the processor 701 performs first processing may include: determining a target planned path, where the target planned path is a path with the lowest passage cost in the M planned paths. The passage cost corresponding to the target planned path is less than a target threshold.

The processor 701 may be further configured to: obtain predicted collision information, where the predicted collision information is information obtained when it is predicted that the vehicle may collide with the obstacle; and determine the risk level of the obstacle and/or the risk level of the vehicle based on the collision information.

The predicted collision information includes at least one of the following: a speed $\Delta v$ of the vehicle relative to the obstacle, an intersection volume occupied when the vehicle may collide with the obstacle, a collision angle at which the vehicle may collide with the obstacle, a center distance between the vehicle and the obstacle, and a category of the obstacle.

It should be noted that, for functions of the control apparatus 70 described in this embodiment of this application, refer to related descriptions in the method embodiments in FIG. 3a, FIG. 3j, and FIG. 4. Details are not described herein again.

An embodiment of this application further provides a computer-readable storage medium. The computer-readable storage medium is configured to store a computer program. The computer program enables a control apparatus to perform some or all of the steps of any one of the control methods described in the foregoing method embodiments.

An embodiment of this application further provides a computer program product. The computer program product includes a non-transitory computer-readable storage medium storing a computer program. The computer program is operable to enable an electronic device to perform some or all of the steps of any one of the convolution operation methods described in the foregoing method embodiments.

It may be understood that a person of ordinary skill in the art may be aware that, units and algorithm steps in the examples described in embodiments disclosed with reference to embodiments of this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art can understand that functions described with reference to various illustrative logical blocks, modules, and algorithm steps disclosed in embodiments of this application may be implemented by hardware, software, firmware, or any combination thereof. If software is used for implementation, the functions described with reference to the illustrative logical blocks, modules, and steps may be stored in or transmitted over a computer-readable medium as one or more instructions or code and executed by a hardware-based processing unit. The computer-readable medium may include a computer-readable storage medium corresponding to a tangible medium, such as a data storage medium, or any communication medium that facilitates transmission of a computer program from one place to another (for example, according to a communication protocol). In this manner, the computer-readable medium may generally correspond to: (1) a non-transitory tangible computer-readable storage medium, or (2) a communication medium, for example, a signal or a carrier. The data storage medium may be any usable medium that can be accessed by one or more computers or one or more processors to retrieve instructions, code, and/or data structures for implementing the technologies described in this application. A computer program product may include a computer-readable medium.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units Some or all of the units may be selected according to actual needs to achieve the purpose of the solutions in the embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

**Claims**

1.  A control method, comprising:

    obtaining (S301) vehicle information, obstacle information, and a drivable area of a vehicle, wherein the drivable area of the vehicle indicates an area in which the vehicle can travel safely; and
    performing (S302) first processing based on the vehicle information and the obstacle information with reference to the drivable area of the vehicle, wherein
    the vehicle information, the obstacle information, and the drivable area of the vehicle indicate M planned paths, and M is an integer greater than 0; and the M planned paths correspond to respective passage costs, and the passage costs are related to at least one of the following information: a risk level of an obstacle and a risk level of the vehicle, wherein the risk level of the obstacle represents a possible intrusion of the obstacle into the drivable area of the vehicle and a degree of a possible loss caused by the obstacle to the vehicle, and the risk level of the vehicle represents a degree of a possible loss caused by the vehicle to the obstacle;
    wherein the performing (S302) first processing comprises:

    determining (S302-1) a target planned path, wherein the target planned path is a path with the lowest passage cost in the M planned paths;
    determining (S302-2) whether the passage cost corresponding to the target planned path is less than a target threshold; and
    controlling (S302-4) the vehicle to remain stationary when it is determined that the passage cost of the target planned path is greater than or equal to the target threshold.

2.  The method according to claim 1, wherein the vehicle information comprises coordinates and a size of the vehicle, the obstacle information comprises coordinates and a size of the obstacle, and the coordinates of the vehicle and the coordinates of the obstacle are coordinates in a geodetic coordinate system ENU; and the method further comprises:

    performing rasterization processing on the drivable area of the vehicle, to obtain a raster map;
    converting the coordinates of the obstacle from the ENU to a vehicle coordinate system according to the coordinates of the vehicle, and obtaining, with reference to the size of the obstacle, an area occupied by the obstacle on the raster map; and

    obtaining, based on the occupied area, the M planned paths from a start point to a target point.

3.  The method according to claim 1, wherein when the passage cost corresponding to the target planned path is less than the target threshold, the method comprises driving (S302-3) the vehicle according to the target planned path.

4.  The method according to any one of claims 1 to 3, wherein the method further comprises:

    obtaining (S401) predicted collision information, wherein the predicted collision information is information obtained when it is predicted that the vehicle may collide with the obstacle; and
    determining (S402) the risk level of the obstacle and/or the risk level of the vehicle based on the predicted collision information.

5.  The method according to claim 4, wherein the predicted collision information comprises at least one of the following: a speed $\Delta v$ of the vehicle relative to the obstacle, an intersection volume occupied when the vehicle may collide with the obstacle, a collision angle at which the vehicle may collide with the obstacle, a center distance between the vehicle and the obstacle, and a category of the obstacle.

6. A control apparatus (50), comprising:

an obtaining unit (500), configured to obtain vehicle information, obstacle information, and a drivable area of a vehicle, wherein the drivable area of the vehicle indicates an area in which the vehicle can travel safely; and a processing unit (510), configured to perform first processing based on the vehicle information and the obstacle information with reference to the drivable area of the vehicle, wherein the vehicle information, the obstacle information, and the drivable area of the vehicle indicate M planned paths, and M is an integer greater than 0; and the M planned paths correspond to respective passage costs, and the passage costs are related to at least one of the following information: a risk level of an obstacle and a risk level of the vehicle, wherein the risk level of the obstacle represents a possible intrusion of the obstacle into the drivable area of the vehicle and a degree of a possible loss caused by the obstacle to the vehicle, and the risk level of the vehicle represents a degree of a possible loss caused by the vehicle to the obstacle; wherein the processing unit (510) is specifically configured to:

determine a target planned path, wherein the target planned path is a path with the lowest passage cost in the M planned paths; and determine whether the passage cost corresponding to the target planned path is less than a target threshold; and control the vehicle to remain stationary when it is determined that the passage cost of the target planned path is greater than or equal to the target threshold.

7. The apparatus (50) according to claim 6, wherein the vehicle information comprises coordinates and a size of the vehicle, the obstacle information comprises coordinates and a size of the obstacle, and the coordinates of the vehicle and the coordinates of the obstacle are coordinates in a geodetic coordinate system ENU; and the processing unit (510) is further configured to:

perform rasterization processing on the drivable area of the vehicle, to obtain a raster map; convert the coordinates of the obstacle from the ENU to a vehicle coordinate system according to the coordinates of the vehicle, and obtain, with reference to the size of the obstacle, an area occupied by the obstacle on the raster map; and

obtain, based on the occupied area, the M planned paths from a start point to a target point.

8. The apparatus (50) according to claim 6, wherein when it is determined that the passage cost corresponding to the target planned path is less than the target threshold, the processing unit (510) is configured to control the vehicle according to the target planned path.

9. The apparatus (50) according to any one of claims 6 to 8, wherein

the obtaining unit (500) is further configured to obtain predicted collision information, wherein the predicted collision information is information obtained when it is predicted that the vehicle may collide with the obstacle; and the processing unit (510) is further configured to determine the risk level of the obstacle and/or the risk level of the vehicle based on the predicted collision information.

10. The apparatus (50) according to claim 9, wherein the predicted collision information comprises at least one of the following: a speed $\Delta v$ of the vehicle relative to the obstacle, an intersection volume occupied when the vehicle may collide with the obstacle, a collision angle at which the vehicle may collide with the obstacle, a center distance between the vehicle and the obstacle, and a category of the obstacle.

11. A computer-readable storage medium, wherein the computer-readable storage medium stores a computer program, the computer program comprises program instructions, and when the program instructions are executed by a processor, the processor is enabled to perform the method according to any one of claims 1 to 5.

**Patentansprüche**

1. Steuerungsverfahren, umfassend:

Erlangen (S301) von Fahrzeuginformationen, Hindernisinformationen und eines fahrbaren Bereichs eines Fahrzeugs, wobei der fahrbare Bereich des Fahrzeugs einen Bereich angibt, in dem das Fahrzeug sicher fahren kann; und

Durchführen (S302) eines ersten Verarbeitens basierend auf den Fahrzeuginformationen und den Hindernisinformationen in Bezug auf den fahrbaren Bereich des Fahrzeugs, wobei

die Fahrzeuginformationen, die Hindernisinformationen und der fahrbare Bereich des Fahrzeugs M geplante Pfade angeben, und M eine ganze Zahl größer als 0 ist; und die M geplanten Pfade jeweiligen Durchfahrtskosten entsprechen, und die Durchfahrtskosten mit mindestens einer der folgenden Informationen in Beziehung stehen: einem Risikoniveau eines Hindernisses und einem Risikoniveau des Fahrzeugs, wobei das Risikoniveau des Hindernisses ein mögliches Eindringen des Hindernisses in den fahrbaren Bereich des Fahrzeugs und einen Grad eines möglichen Verlustes darstellt, der dem Fahrzeug durch das Hindernis veranlasst wird, und das Risikoniveau des Fahrzeugs einen Grad eines möglichen Verlustes darstellt, der dem Hindernis durch das Fahrzeug veranlasst wird;

wobei das Durchführen (S302) des ersten Verarbeitens Folgendes umfasst:

Bestimmen (S302-1) eines geplanten Zielpfades, wobei der geplante Zielpfad ein Pfad mit den niedrigsten Durchfahrtskosten in den M geplanten Pfaden ist;
Bestimmen (S302-2), ob die Durchfahrtskosten, die dem geplanten Zielpfad entsprechen, kleiner als ein Zielschwellenwert sind; und
Steuern (S302-4) des Fahrzeugs, um stehen zu bleiben, wenn bestimmt wird, dass die Durchfahrtskosten des geplanten Zielpfads größer oder gleich dem Zielschwellenwert sind.

2. Verfahren nach Anspruch 1, wobei die Fahrzeuginformationen Koordinaten und eine Größe des Fahrzeugs umfassen, die Hindernisinformationen Koordinaten und eine Größe des Hindernisses umfassen und die Koordinaten des Fahrzeugs und die Koordinaten des Hindernisses Koordinaten in einem geodätischen Koordinatensystem ENU sind; und das Verfahren ferner Folgendes umfasst:

Durchführen von Rasterisierungsverarbeiten des befahrbaren Bereichs des Fahrzeugs, um eine Rasterkarte zu erlangen;
Umwandeln der Koordinaten des Hindernisses von dem ENU in ein Fahrzeugkoordinatensystem gemäß den Koordinaten des Fahrzeugs und Erlangen eines durch das Hindernis eingenommenen Bereichs auf der Rasterkarte in Bezug auf die Größe des Hindernisses; und
Erlangen der M geplanten Pfade von einem Startpunkt zu einem Zielpunkt basierend auf dem besetzten Bereich.

3. Verfahren nach Anspruch 1, wobei, wenn die Durchfahrtskosten, die dem geplanten Zielpfad entsprechen, geringer als der Zielschwellenwert sind, das Verfahren Fahren (S302-3) des Fahrzeugs gemäß dem geplanten Zielpfad umfasst.

4. Verfahren nach einem der Ansprüche 1 bis 3, wobei das Verfahren ferner Folgendes umfasst:

Erlangen (S401) von vorhergesagten Kollisionsinformationen, wobei die vorhergesagten Kollisionsinformationen Informationen sind, die erlangt werden, wenn vorhergesagt wird, dass das Fahrzeug mit dem Hindernis kollidieren könnte; und
Bestimmen (S402) des Risikoniveaus des Hindernisses und/oder des Risikoniveaus des Fahrzeugs basierend auf den vorhergesagten Kollisionsinformationen.

5. Verfahren nach Anspruch 4, wobei die vorhergesagte Kollisionsinformationen mindestens eines von Folgendem umfassen: eine Geschwindigkeit $\Delta v$ des Fahrzeugs relativ zum Hindernis, ein Kreuzungsvolumen, das eingenommen wird, wenn das Fahrzeug mit dem Hindernis kollidieren könnte, einen Kollisionswinkel, bei dem das Fahrzeug mit dem Hindernis kollidieren könnte, einen Mittenabstand zwischen dem Fahrzeug und dem Hindernis und eine Kategorie des Hindernisses.

6. Steuerungsvorrichtung (50), umfassend:

eine Erlangungseinheit (500), die dazu konfiguriert ist, Fahrzeuginformationen, Hindernisinformationen und einen fahrbaren Bereich eines Fahrzeugs zu erlangen, wobei der fahrbare Bereich des Fahrzeugs einen Bereich angibt, in dem das Fahrzeug sicher fahren kann; und
eine Verarbeitungseinheit (510), die dazu konfiguriert ist, ein erstes Verarbeiten basierend auf den Fahrzeuginformationen und den Hindernisinformationen in Bezug auf den fahrbaren Bereich des Fahrzeugs durchzuführen, wobei
die Fahrzeuginformationen, die Hindernisinformationen und der fahrbare Bereich des Fahrzeugs M geplante Pfade angeben, und M eine ganze Zahl größer als 0 ist; und die M geplanten Pfade jeweiligen Durchfahrtskosten entsprechen, und die Durchfahrtskosten mit mindestens einer der folgenden Informationen in Beziehung stehen: einem Risikoniveau eines Hindernisses und einem Risikoniveau des Fahrzeugs, wobei das Risikoniveau des Hindernisses ein mögliches Eindringen des Hindernisses in den fahrbaren Bereich des Fahrzeugs und einen Grad eines möglichen Verlustes darstellt, der dem Fahrzeug durch das Hindernis veranlasst wird, und das Risikoniveau des Fahrzeugs einen Grad eines möglichen Verlustes darstellt, der dem Hindernis durch das Fahrzeug veranlasst wird;
wobei die Verarbeitungseinheit (510) speziell zu Folgendem konfiguriert ist:

Bestimmen eines geplanten Zielpfades, wobei der geplante Zielpfad ein Pfad mit den niedrigsten Durchfahrtskosten in den M geplanten Pfaden ist; und
Bestimmen, ob die Durchfahrtskosten, die dem geplanten Zielpfad entsprechen, geringer als ein Zielschwellenwert sind; und
Steuern des Fahrzeugs, um stehen zu bleiben, wenn bestimmt wird, dass die Durchfahrtskosten des geplanten Zielpfads größer oder gleich dem Zielschwellenwert sind.

7. Vorrichtung (50) nach Anspruch 6, wobei die Fahrzeuginformationen Koordinaten und eine Größe des Fahrzeugs umfassen, die Hindernisinformationen Koordinaten und eine Größe des Hindernisses umfassen und die Koordinaten des Fahrzeugs und die Koordinaten des Hindernisses Koordinaten in einem geodätischen Koordinatensystem ENU sind; und die Verarbeitungseinheit (510) ferner zu Folgendem konfiguriert ist:

Durchführen des Rasterisierungsverarbeitens des befahrbaren Bereichs des Fahrzeugs, um eine Rasterkarte zu erlangen;
Umwandeln der Koordinaten des Hindernisses von dem ENU in ein Fahrzeugkoordinatensystem gemäß den Koordinaten des Fahrzeugs und Erlangen eines durch das Hindernis eingenommenen Bereichs auf der Rasterkarte in Bezug auf die Größe des Hindernisses; und
Erlangen der M geplanten Pfade von einem Startpunkt zu einem Zielpunkt basierend auf dem besetzten Bereich.

8. Vorrichtung (50) nach Anspruch 6, wobei, wenn bestimmt wird, dass die Durchfahrtskosten, die dem geplanten Zielpfad entsprechen, geringer als der Zielschwellenwert sind, die Verarbeitungseinheit (510) dazu konfiguriert ist, das Fahrzeug gemäß dem geplanten Zielpfad zu steuern.

9. Vorrichtung (50) nach einem der Ansprüche 6 bis 8, wobei

die Erlangungseinheit (500) ferner dazu konfiguriert ist, vorhergesagte Kollisionsinformationen zu erlangen, wobei die vorhergesagten Kollisionsinformationen Informationen sind, die erlangt werden, wenn vorhergesagt wird, dass das Fahrzeug mit dem Hindernis kollidieren könnte; und
die Verarbeitungseinheit (510) ferner dazu konfiguriert ist, das Risikoniveau des Hindernisses und/oder das Risikoniveau des Fahrzeugs basierend auf den vorhergesagten Kollisionsinformationen zu bestimmen.

10. Vorrichtung (50) nach Anspruch 9, wobei die vorhergesagte Kollisionsinformationen mindestens eines von Folgendem umfassen: eine Geschwindigkeit $\Delta v$ des Fahrzeugs relativ zum Hindernis, ein Kreuzungsvolumen, das eingenommen wird, wenn das Fahrzeug mit dem Hindernis kollidieren könnte, einen Kollisionswinkel, bei dem das Fahrzeug mit dem Hindernis kollidieren könnte, einen Mittenabstand zwischen dem Fahrzeug und dem Hindernis und eine Kategorie des Hindernisses.

11. Computerlesbares Speichermedium, wobei das computerlesbare Speichermedium ein Computerprogramm speichert, das Computerprogramm Programmanweisungen umfasst, und wenn die Programmanweisungen durch einen Prozessor ausgeführt werden, der Prozessor in die Lage versetzt wird, das Verfahren nach einem der Ansprüche 1 bis 5 durchzuführen.

**Revendications**

1. Procédé de commande, comprenant :

l'obtention (S301) d'informations de véhicule, d'informations d'obstacle, et d'une zone de conduite d'un véhicule, dans lequel la zone de conduite du véhicule indique une zone dans laquelle le véhicule peut se déplacer en toute sécurité ; et

la réalisation (S302) d'un premier traitement sur la base des informations de véhicule et des informations d'obstacle en référence à la zone de conduite du véhicule, dans lequel

les informations de véhicule, les informations d'obstacle, et la zone de conduite du véhicule indiquent M trajets prévus, et M est un entier supérieur à 0 ; et les M trajets prévus correspondent à des coûts de passage respectifs, et les coûts de passage sont liés à au moins une des informations suivantes :

un niveau de risque d'un obstacle et un niveau de risque du véhicule, dans lequel le niveau de risque de l'obstacle représente une intrusion possible de l'obstacle dans la zone de conduite du véhicule et un degré de perte possible causée par l'obstacle au véhicule, et le niveau de risque du véhicule représente un degré de perte possible causée par le véhicule à l'obstacle ;

dans lequel la réalisation (S302) du premier traitement comprend :

la détermination (S302-1) d'un trajet prévu cible, dans lequel le trajet prévu cible est un trajet avec le coût de passage le plus bas parmi les M trajets prévus ;

le fait de déterminer (S302-2) si le coût de passage correspondant au trajet prévu cible est inférieur à un seuil cible ; et

la commande (S302-4) du véhicule pour qu'il reste stationnaire lorsqu'il est déterminé que le coût de passage du trajet prévu cible est supérieur ou égal au seuil cible.

2. Procédé selon la revendication 1, dans lequel les informations de véhicule comprennent des coordonnées et une taille du véhicule, les informations d'obstacle comprennent des coordonnées et une taille de l'obstacle, et les coordonnées du véhicule et les coordonnées de l'obstacle sont des coordonnées dans un système de coordonnées géodésiques ENU ; et le procédé comprend également :

la réalisation d'un traitement de rastérisation sur la zone de conduite du véhicule, pour obtenir une carte raster ;

la conversion des coordonnées de l'obstacle de l'ENU en un système de coordonnées de véhicule selon les coordonnées du véhicule, et l'obtention, en référence à la taille de l'obstacle, d'une zone occupée par l'obstacle sur la carte raster ; et

l'obtention, sur la base de la zone occupée, des M trajets prévus d'un point de départ à un point cible.

3. Procédé selon la revendication 1, dans lequel lorsque le coût de passage correspondant au trajet prévu cible est inférieur au seuil cible, le procédé comprend la conduite (S302-3) du véhicule selon le trajet prévu cible.

4. Procédé selon l'une quelconque des revendications 1 à 3, dans lequel le procédé comprend également :

l'obtention (S401) d'informations de collision prédites, dans lequel les informations de collision prédites sont des informations obtenues lorsqu'il est prédit que le véhicule peut entrer en collision avec l'obstacle ; et

la détermination (S402) du niveau de risque de l'obstacle et/ou du niveau de risque du véhicule sur la base des informations de collision prédites.

5. Procédé selon la revendication 4, dans lequel les informations de collision prédites comprennent au moins l'un des éléments suivants : une vitesse $\Delta v$ du véhicule par rapport à l'obstacle, un volume d'intersection occupé lorsque le véhicule peut entrer en collision avec l'obstacle, un angle de collision auquel le véhicule peut entrer en collision avec l'obstacle, une distance centrale entre le véhicule et l'obstacle, et une catégorie de l'obstacle.

6. Appareil de commande (50), comprenant :

une unité d'obtention (500), configurée pour obtenir des informations de véhicule, des informations d'obstacle, et une zone de conduite d'un véhicule, dans lequel la zone de conduite du véhicule indique une zone dans laquelle le véhicule peut se déplacer en toute sécurité ; et

une unité de traitement (510), configurée pour réaliser un premier traitement sur la base des informations de véhicule et des informations d'obstacle en référence à la zone de conduite du véhicule, dans lequel

les informations de véhicule, les informations d'obstacle, et la zone de conduite du véhicule indiquent M trajets prévus, et M est un entier supérieur à 0 ; et les M trajets prévus correspondent à des coûts de passage respectifs, et les coûts de passage sont liés à au moins une des informations suivantes :

un niveau de risque d'un obstacle et un niveau de risque du véhicule, dans lequel le niveau de risque de l'obstacle représente une intrusion possible de l'obstacle dans la zone de conduite du véhicule et un degré de perte possible causée par l'obstacle au véhicule, et le niveau de risque du véhicule représente un degré de perte possible causée par le véhicule à l'obstacle ;

dans lequel l'unité de traitement (510) est spécifiquement configurée pour :

déterminer un trajet prévu cible, dans lequel le trajet prévu cible est un trajet avec le coût de passage le plus bas parmi les M trajets prévus ; et

déterminer si le coût de passage correspondant au trajet prévu cible est inférieur à un seuil cible ; et commander le véhicule pour qu'il reste stationnaire lorsqu'il est déterminé que le coût de passage du trajet prévu cible est supérieur ou égal au seuil cible.

7. Appareil (50) selon la revendication 6, dans lequel les informations de véhicule comprennent des coordonnées et une taille du véhicule, les informations d'obstacle comprennent des coordonnées et une taille de l'obstacle, et les coordonnées du véhicule et les coordonnées de l'obstacle sont des coordonnées dans un système de coordonnées géodésiques ENU ; et l'unité de traitement (510) est également configurée pour :

réaliser un traitement de rastérisation sur la zone de conduite du véhicule, pour obtenir une carte raster ;
convertir les coordonnées de l'obstacle de l'ENU en un système de coordonnées de véhicule selon les coordonnées du véhicule, et obtenir, en référence à la taille de l'obstacle, une zone occupée par l'obstacle sur la carte raster ; et
obtenir, sur la base de la zone occupée, les M trajets prévus d'un point de départ à un point cible.

8. Appareil (50) selon la revendication 6, dans lequel lorsqu'il est déterminé que le coût de passage correspondant au trajet prévu cible est inférieur au seuil cible, l'unité de traitement (510) est configurée pour commander le véhicule selon le trajet prévu cible.

9. Appareil (50) selon l'une quelconque des revendications 6 à 8, dans lequel

l'unité d'obtention (500) est également configurée pour obtenir des informations de collision prédites, dans lequel les informations de collision prédites sont des informations obtenues lorsqu'il est prédit que le véhicule peut entrer en collision avec l'obstacle ; et
l'unité de traitement (510) est également configurée pour déterminer le niveau de risque de l'obstacle et/ou le niveau de risque du véhicule sur la base des informations de collision prédites.

10. Appareil (50) selon la revendication 9, dans lequel les informations de collision prédites comprennent au moins l'un des éléments suivants : une vitesse $\Delta v$ du véhicule par rapport à l'obstacle, un volume d'intersection occupé lorsque le véhicule peut entrer en collision avec l'obstacle, un angle de collision auquel le véhicule peut entrer en collision avec l'obstacle, une distance centrale entre le véhicule et l'obstacle, et une catégorie de l'obstacle.

11. Support de stockage lisible par ordinateur, dans lequel le support de stockage lisible par ordinateur stocke un programme informatique, le programme informatique comprend des instructions de programme, et lorsque les instructions de programmes sont exécutées par un processeur, le processeur est activé pour réaliser le procédé selon l'une quelconque des revendications 1 à 5.

FIG. 1

Isolation belt

Non-motor lane

Social vehicle

Vehicle

FIG. 2a

FIG. 2b

**Non-motor lane**

**Isolation belt**

**Non-motor lane**

**Cyclist**

**Vehicle**

**Social vehicle**

FIG. 2c

FIG. 2d

Obtain vehicle information, obstacle information, and a drivable area of a vehicle — S301

Perform first processing based on the vehicle information and the obstacle information with reference to the drivable area of the vehicle — S302

FIG. 3a

FIG. 3b

Isolation belt

Non-motor lane

Compliant drivable area

Social vehicle

Vehicle

FIG. 3c

FIG. 3d

FIG. 3e

Social
vehicle

Expansion

Obstacle

Lane
centerline

Lane
boundary
lines

This vehicle

FIG. 3f

Expansion

Obstacle

Social
vehicle

Lane
centerline

Lane
boundary
lines

This vehicle

FIG. 3g

FIG. 3h

Vehicle

Obstacle

FIG. 3i

Obtain vehicle information, obstacle
information, and a drivable area of a vehicle — S301

Determine a target planned path based on
the vehicle information and the obstacle
information with reference to the drivable — S302-1
area of the vehicle

Determine whether
a passage cost corresponding to the
target planned path is less than a target — S302-2
threshold

Yes

No

Drive according to the target
planned path — S302-3

Control the vehicle to
remain stationary — S302-4

FIG. 3j

EP 4 261 092 B1

FIG. 3k

| Obtain predicted collision information based on location information and motion status information of a vehicle and an obstacle | S401 |

| Obtain a risk level of the obstacle and/or a risk level of the vehicle based on the predicted collision information | S402 |

FIG. 4

50

500    510

Obtaining unit    Processing unit

FIG. 5

60

600            610

Obtaining unit

Processing unit

FIG. 6

70

Control apparatus

701

Processor

702

Memory

703

Communication
interface

Application
program code

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200377085 A1
- US 20190276012 A1
- CN 110550029 A